(19) Europäisches Patentamt
European Patent Office
Office européen des brevets

(11) Veröffentlichungsnummer: **0 247 476**
**B1**

(12) # EUROPÄISCHE PATENTSCHRIFT

(45) Veröffentlichungstag der Patentschrift: **27.12.90**

(51) Int. Cl.[5]: **C 07 C 271/26,** C 08 K 5/16

(21) Anmeldenummer: **87107153.6**

(22) Anmeldetag: **18.05.87**

(54) **Neue Hydroxyphenylurethane, Verfahren zu ihrer Herstellung, ihre Verwendung und neue Hydroxyphenylurethangruppen enthaltende Chlorkohlensäureester.**

(30) Priorität: **28.05.86 DE 3618006**

(43) Veröffentlichungstag der Anmeldung:
**02.12.87 Patentblatt 87/49**

(45) Bekanntmachung des Hinweises auf die Patenterteilung:
**27.12.90 Patentblatt 90/52**

(84) Benannte Vertragsstaaten:
**DE FR GB IT**

(56) Entgegenhaltungen:
**DE-A-1 745 287**
**DE-A-2 514 540**

(73) Patentinhaber: **BAYER AG**
**D-5090 Leverkusen 1 Bayerwerk (DE)**

(72) Erfinder: **Stammann, Günter, Dr.**
**Korweg 9**
**D-5270 Gummersbach 1 (DE)**
Erfinder: **Bottenbruch, Ludwig, Dr.**
**Wöhlerstrasse 5**
**D-4150 Krefeld 1 (DE)**
Erfinder: **Waldmann, Helmut, Dr.**
**Henry-T.-von-Böttinger-Strasse 15**
**D-5090 Leverkusen 1 (DE)**

**EP 0 247 476 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue Hydroxyphenylurethane, Verfahren zu ihrer Herstellung, ihre Verwendung zur Herstellung makromolekularer Stoffe und als Antioxidantien und neue Hydroxyphenylurethanegruppen enthaltende Chlorkohlensäureester.

In der DE—OS 25 14 540 werden u.a. Hydroxyphenylurethane beschrieben, die der Formel (1) entsprechen,

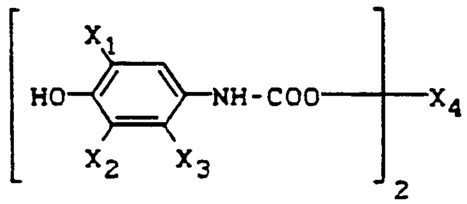

(1),

in der

$X_1$ $C_3$- oder $C_4$-Alkyl,

$X_2$ $C_1$- bis $C_4$-Alkyl,

$X_3$ Wasserstoff oder Methyl und

$X_4$ $C_2$- bis $C_8$-Alkylen, Phenylen oder einen Rest der Formel (2)

$$-(CH_2)_p-X-(CH_2)_q- \qquad (2)$$

mit X = Sauerstoff oder Schwefel und p und q unabhängig voneinander gleich 2 oder 3 bedeuten können. Solche Hydroxyphenylurethane können als verbesserte Stabilisatoren für Elastomere verwendet werden.

Es wurden nun neue Hydroxyphenylurethane der Formel (3) gefunden

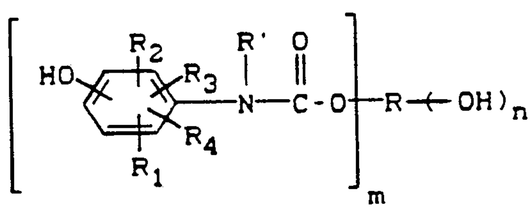

(3),

in der

m für eine ganze Zahl von 1 bis 4 und

n für Null oder ine ganze Zahl von 1 bis 3 steht und die Summe von m + n mindestens 2 und höchstens 4 beträgt,

$R_1$ bis $R_4$ unabhängig voneinander Wasserstoff, Halogen, Cyano, Alkyl, Cycloalkyl, Aryl, Aralkyl, Oxyalkyl, Ooxphenyl oder Oxybenzyl,

R' Wasserstoff, Alkyl, Acyl oder Phenyl und

R im Falle von m + n von 2 bis 4

a) einem m + n-bindigen, geradkettigen, verzweigten oder cyclischen, gesättigten oder ungesättigten, gegebenenfalls substituierten Kohlenwasserstoffrest mit insgesamt 6 bis 30 C-Atomen oder

b) einen Rest der Formel (4)

$$Z-[(-OC_2H_3Y-)_r]_{m+n} \qquad (4)$$

mit Z = einem geradkettigen, verzweigten oder cyclischen, gesättigten oder ungesättigten, gegebenenfalls substituierten Rest mit insgesamt 3 bis 20 C-Atomen,

Y = und/oder $CH_3$ (unabhängig von benachbarten Kettengliedern) und

r = einer ganzen Zahl von 1 bis 1000 oder einem gegebenenfalls nicht ganzzahligen Mittelwert von 1 bis 1000 und

im Falle von m + n = 2 auch

c) einem Rest der Formel (5)

$$[(-CH_2-)_s-O]_r(CH_2)_s- \qquad (5)$$

mit s = einer ganzen Zahl von 3 bis 6 und dem Produkt s·t = einer ganzen Zahl von 6 bis 30 oder einem gegebenenfalls nicht ganzzahligen Mittelwert von 6 is 30 oder

d) einen Rest der Formel (6)

$$-\!\!\left[C_2H_3Y-O\right]_u\!\!\left[C_2H_3Y\right]- \qquad (6)$$

mit u = einer ganzen Zahl von 2 bis 200 000 oder einem gegebenenfalls nicht ganzzahligen Mittelwert von 2 bis 200 000 und

Y = H und/oder $CH_3$ (unabhängig von benachbarten Kettengliedern)

bedeuten, mit Ausnahme der oben beschriebenen Verbindungen der Formel (1).

In Formel (3) gibt m auch die pro Molekül vorhandenen phenolischen OH-Gruppen und n auch die pro Molekül vorhandenen alkoholischen OH-Gruppen an und die Summe m + n auch die gesamte Zahl vorhandener OH-Gruppen, sowie die Bindigkeit des Restes R. Vorzugsweise beträgt die Summe m + n 2 oder 3, besonders bevorzugt 2. Falls m + n 3 oder 4 beträgt ist n vorzugsweise 0.

In Formel (3) befindet sich die OH-Gruppe am aromatischen Kern vorzugsweise in meta- oder para-Stellung zur —NR'—CO . . . -Gruppierung, besonders bevorzugt in para-Stellung dazu.

Bei den Resten $R_1$ bis $R_4$ steht Halogen beispielsweise für Fluor, Chlor, Brom oder Iod, Alkyl beispielsweise für $C_1$- bis $C_{20}$-Alkyl, Cycloalkyl beispielsweise für $C_3$- bis $C_{20}$-Cycloalkyl, Aryl beispielsweise für $C_6$- bis $C_{10}$-Aryl, Aralkyl beispielsweise für $C_7$- bis $C_{10}$-Aralkyl und Oxyalkyl beispielsweise für Oxy-$C_1$- bis —$C_{20}$-Alkyl, Vorzugsweise stehen dabei Halogen für Fluor oder Chlor, Alkyl für $C_1$- bis $C_6$-Alkyl, Cycloalkyl für $C_5$- oder $C_6$-Cycloalkyl, Aryl für $C_6$- bis $C_8$-Aryl, Aralkyl für $C_7$- bis $C_8$-Aralkyl und Oxyalkyl für Oxy-$C_1$- bis —$C_6$-Alkyl.

Die Reste $R_1$ bis $R_4$ stehen unabhängig voneinander besonders bevorzugt für Wasserstoff, Chlor, Methyl oder tert.-Butyl. Besonders bevorzugt stehen $R_1$ und $R_2$ in ortho-Stellung zur OH-Gruppe, wobei sich diese in para-Stellung zur —NR'—COO . . . -Gruppierung befindet. Besonders bevorzugt sind dann $R_1$ und $R_2$ gleich und stehen für Wasserstoff, Chlor, Methyl oder tert.-Butyl und $R_3$ und $R_4$ für Wasserstoff. Ganz besonders bevorzugt stehen $R_1$ bis $R_4$ für Wasserstoff.

In Formel (3) steht R' vorzugsweise für Wasserstoff, $C_1$- bis $C_6$-Alkyl, $C_1$- bis $C_6$-Acyl oder Phenyl, besonders bevorzugt für Wasserstoff, Methyl oder Ethyl, ganz besonders bevorzugt für Wasserstoff.

In Formel (3) kann R in der Bedeutung von a) als Substituenten beispielsweise Halogenatome, vorzugsweise Fluor- oder Chloratome, Alkoxygruppen, vorzugsweise $C_1$- bis $C_6$- Alkoxygruppen und/oder Estergruppen, vorzugsweise solche mit 2 bis 5 C-Atomen, enthalten. Bei ungesättigten Resten kann es sich beispielsweise um solche handeln, die 1 bis 3 ethylenische Doppelbindungen oder 1 bis 3 aromatische Ringe enthalten. Wenn m für 2, n für O, $R_1$ und $R_2$ für $C_3$- oder $C_4$-Alkyl stehen, dann steht R in der Bedeutung von a) nicht für Phenylen und nicht für $C_6$- bis $C_8$-Alkylen. Wenn m für 2 und für O steht, dann liegen außerdem die beiden Verknüpfungsstellen des Restes R in der Bedeutung von a) nicht im Substitutionsmuster tertiär/tertiär oder tertiär/sekundär vor.

Vorzugsweise handelt es sich bei R in der Bedeutung von a) um eine gesättigte Kohlenwasserstoffkette mit insgesamt 6 bis 20 C-Atomen, die gegebenenfalls 1 bis 3 gesättigte Kohlenwasserstoffseitenketten mit je 1 bis 3 C-Atomen, gegebenenfalls 1 bis 8 Fluor- und/oder Chloratomen, gegebenenfalls 1 bis 3 Alkoxygruppen mit je 2 bis 4 C-Atomen, gegebenenfalls 1 bis 2 Estergruppen mit je 2 bis 4 C-Atomen, gegebenenfalls 1 bis 3 Cycloalkylreste und/oder gegebenenfalls 1 bis 3 Phenylreste als Substituenten enthalten, sowie um Kohlenwasserstoffreste der gleichen Art, bei denen das Kohlenwasserstoffgerüst 1 bis 2 ethylenische Doppelbindungen enthält.

Beispiele für Reste R in der Bedeutung von a) sind folgende: α, ω-n-Alkylen mit 6 bis 30 C-Atomen, 2,5-Hexandiyl, 4-Methyl-1,4-pentandiyl, 3-Methyl-1,5-pentandiyl, 2-Methyl-2-(1-propyl)-1,3-propandiyl, 2,2-Diethyl-1,3-propandiyl, 2-Ethyl-1,3-hexandiyl, 2,5-Dimethyl-1,5-hexandiyl, 2,2,4-Trimethyl-1,3-pentandiyl, 2,2,4-Trimethyl-1,6-hexandiyl, 1,12-Octadecandiyl, 2-(1-Propoxy)-1,3-propandiyl, 2-(2-Propoxymethyl)-2-ethyl-1,3-propandiyl, 2,3-Dichlorbutandiyl, Perfluorhexan-1,6-diyl, 2-Acetoxymethyl-2-methyl-1,3-propandiyl, Hexadec-8-en-1,16-diyl, 15-Methylhexadec-2-en-1,15-diyl, 2-Cyclohexyliden-1,3-propandiyl und 2,2-Diphenyl-1,3-propandiyl. Von diesen Resten sind die bis enschließlich 1,12-Octadecandiyl genannten bevorzugt, ganz besonders bevorzugt α,ω-n-Alkylen mit 8 bis 20 C-Atomen.

In den erfindungsgemäßen Hydroxyphenylurethanen der Formel (3) kann R in der Bedeutung von a) von Einzelmolekül zu Einzelmolekül variieren. Insbesondere können die erfindungsgemäßen Hydroxyphenylurethane der Formel (3) mit R in der Bedeutung von a) auch als Gemische vorliegen, bei denen verschiedene R isomer zueinander sind und/oder einer homologen Reihe angehören.

In Formel (3) kann R in der Bedeutung von b) (siehe Formel (4)) als Stuktureteil Z beispielsweise einen Reste enthalten, wie er zuvor für R in der Bedeutung von a) beschrieben wurde, jedoch von 3 C-Atomen an und nur solche bis 20 C-Atomen. Z kann auch Heteroatome enthalten, beispielsweise bis zu 4 ausgewählt aus Phosphor, Stickstoff, Schwefel und/oder Silicium oder bis zu 12 ausgewählt aus Sauerstoff und/oder Chlor. Weiterhin kann Z der Formel (7)

$$-(-CH_2-)_v-O\left[(-CH_2-)_v-O\right]_w(-CH_2-)_v- \qquad (7)$$

entsprechen, in der

v für eine ganze Zahl von 3 bis 6 und

w für Null oder 1 stehen.

Bei Z kann es sich auch um Mischungen verschiedener Rester z.B. verschiedener oligomerer Reste der Formel (7) handeln. Z kann sich auch von einem gesättigten cyclischen oder aromatischen Grundgerüst ableiten.

In Formel (3) kann R in der Bedeutung von b) (siehe Formel (4)) als Strukturteil Z beispielsweise enthalten: α,ω-n-Alkylen mit 3 bis 20 C-Atomen, 2,5-Hexandiyl, 4-Methyl-1,4-pentandiyl, 3-Methyl-1,5-pentandiyl, 2-Methyl-2-(1-propyl)-1,3-propandiyl, 2,2-Diethyl-1,3-propandiyl, 2-Ethyl-1,3-hexandiyl, 2,5-Dimethyl-1,5-hexandiyl, 2,2,4-Trimethyl-1,3-pentandiyl, 2,2,4-Trimethyl-1,6-hexandiyl, 1,12-Octadecandiyl, 2-(1-Propoxy)-1,3-propandiyl, 2-(2-Propoxymethyl)-2-ethyl-1,3-propandiyl, 2,3-Dichlorbutandiyl, Perfluorhexan-1,6-diyl, 2-Acetoxymethyl-2-methyl-1,3-propandiyl, Hexadec-8-en-1,16-diyl, 15-Methyl-hexadec-2-en-1,15-diyl, 2-Cyclohexyliden-1,3-propandiyl und 2,2-Diphenyl-1,3-propandiyl, Reste der Formel (7) mit v = 3 und w = 0, v = 3 und w = 1, v = 4 und w = 0, v = 4 und w = 1, v = 5 und w = 0, v = 5 und w = 1, v = 6 und w = 0 und v = 6 und w = 1 und Reste der Formeln (8.1) bis (14,10).

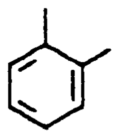
(8.1)

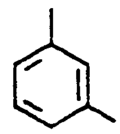
(8.2)

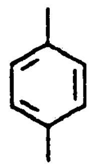
(8.3)

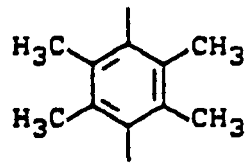
(8.4)

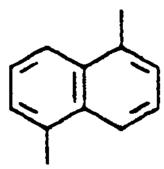
(8.5)

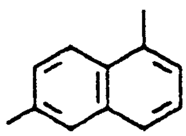
(8.6)

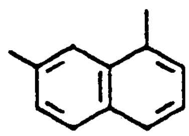
(8.7)

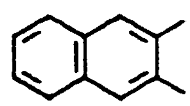
(8.8)

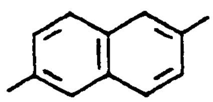
(8.9)

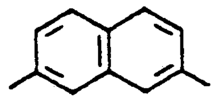
(8.10)

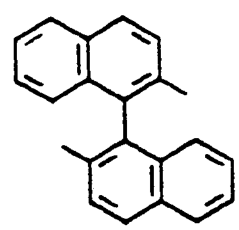
(8.11)

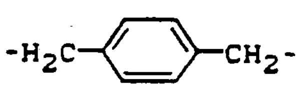
(9.1)

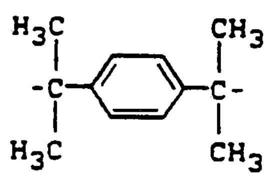
(9.2)

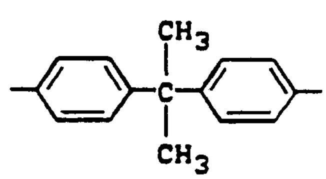
(9.3)

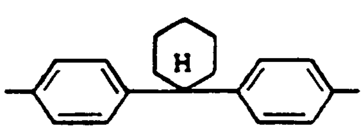
(9.4)

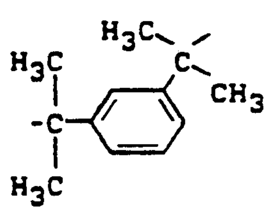
(9.5)

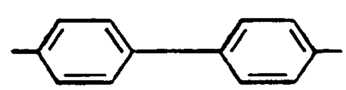
(9.6)

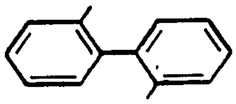

(9.7)

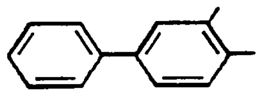

(9.8)

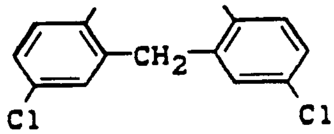

(9.9)

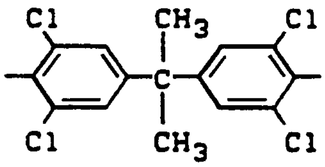

(9.10)

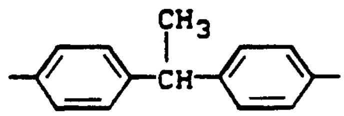

(9.11)

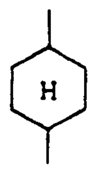

(10.1)

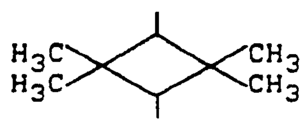

(10.2)

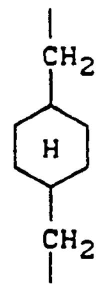

(10.3)

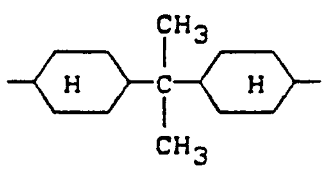

(10.4)

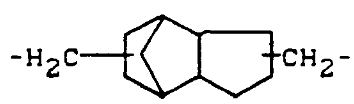

(10.5)

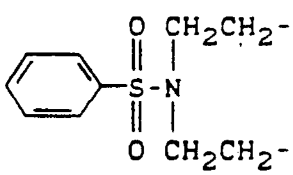

(11.1)

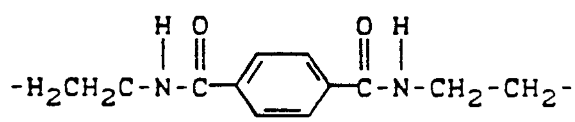

(11.2)

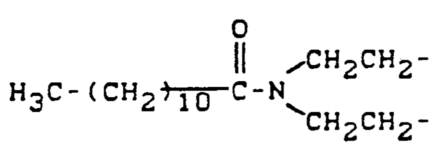

(11.3)

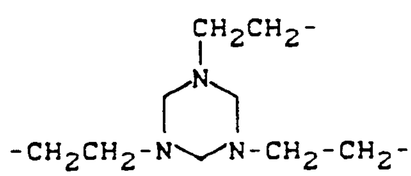

(11.4)

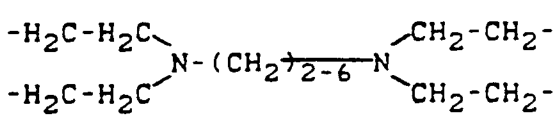

(11.5)

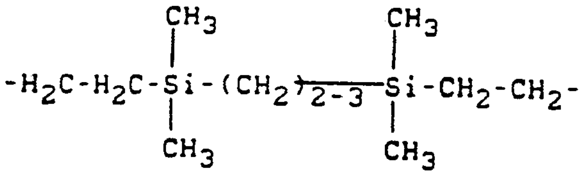

(12.1)

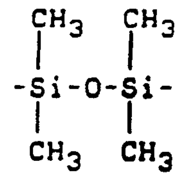

(12.2)

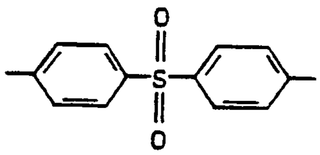

(13.1)

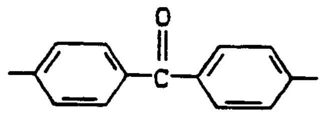

(13.2)

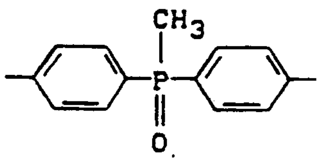

(13.3)

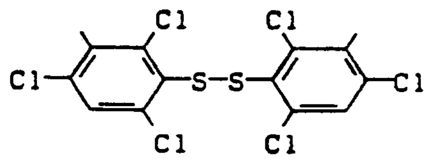

(13.4)

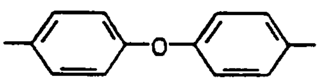

(13.5)

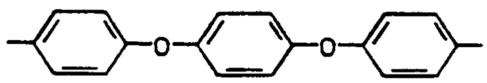

(13.6)

$-CH_2CH_2-S-CH_2-CH_2-$

(13.7)

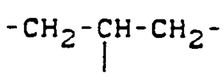

(14.1)

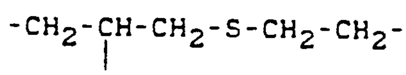

(14.2)

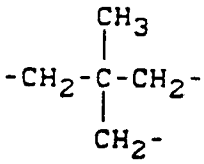

(14.3)

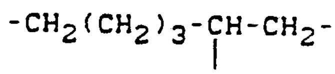

(14.4)

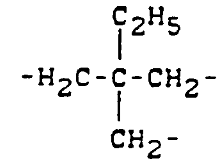

(14.5)

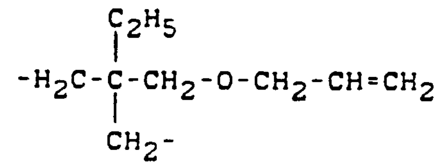

(14.6)

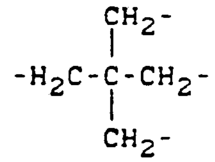

(14.7)

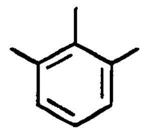

(14.8)

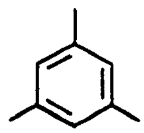

(14.9)

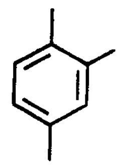

(14.10)

Weiterhin kommen als Z Reste in Frage, die sich durch den Wegfall der allkoholischen OH-Gruppen von solchen Diolen oder Polyolen ableiten, die durch Ethoxylierung und/oder Propoxylierung acider Verbindungen zugänglich sind. Beispiele für solche Diole und Polyole sind aufgeführt in Encyclopedia of Polymer Science and Technology, Vol. 6, S. 103—209 (New York 1967) unter dem Stichwort 1,2-Epoxy Polymers, in N. Schönfeldt, Grenzflächenaktive Ethylenoxidaddukte (Stuttgart 1976), S. 13—102 und 897—986, sowie in N. Schönfeldt, Grenzflächenaktive Ethylenoxidaddukte (Stuttgart 1984), S. 14—44 und 421—472.

In Formel (3) enthält R in der Bedeutung von b) (siehe Formel (4)) als Strukturteil Z vorzugsweise einen Reste der Formeln (8.1) bis (10.5) oder (13.1) bis (14.10). In Formel (4) steht weiterhin Y vorzugsweise für Wasserstoff und r vorzugsweise für eine ganze Zahl von 1 bis 100, besonders bevorzugt für 1 oder 2.

In Formel (3) kann R in der Bedeutung von c) (siehe auch Formel (5)) für keinen Rest stehen, bei dem $m = 2$, $n = 0$, $R_1$ und $R_2 = C_3$- oder $C_4$-Alkyl und $s \cdot t = 6$ ist. Von den Resten der Formel (5) sind solche bevorzugt, die Formeln (15) bis (18) entsprechen.

$$—(—CH_2—)_3—O—[(—CH_2—)_3—O]_{x1}(—CH_2—)_3—,\ x_1 = 1 \text{ bis } 8 \qquad (15)$$

$$—(—CH_2—)_4—O—[(—CH_2—)_4—O]_{x2}(—CH_2—)_4—,\ x_2 = 1 \text{ bis } 5 \qquad (16)$$

$$—(—CH_2—)_5—O—[(—CH_2—)_5—O]_{x3}(—CH_2—)_5—,\ x_3 = 1 \text{ bis } 4 \qquad (17)$$

$$—(—CH_2—)_6—O—[(—CH_2—)_6—O]_{x4}(—CH_2—)_3—,\ x_4 = 1 \text{ bis } 3 \qquad (15)$$

Vorzugsweise stehen $x_1$ und $x_4$ in den Formeln (15) bis (18) für 1 oder 2. Reste der Formeln (5), insbesondere solche der Formeln (15) bis (18), können auch als Gemisch oligomerer Reste enterschiedlicher Kettenlängen vorliegen. Ferner können Reste der Formel (5) innerhalb einer Kette Segmente mit verschiedenen Werten für s aufweisen.

In Formel (3) kann R in der Bedeutung von d) (siehe Formel (6)) für Reste stehen, die sich von solchen Polyethylenglykolen, Poly-1,2-propylenglykolen oder Mischungen davon, die in beliebiger Weise aus Ethylenoxid und/oder Propylenoxid hergestellt werden können, durch den Wegfall der alkoholischen OH-Gruppen ableiten. Beispielsweise sind solche Herstellverfahren für Polyethylen- und/oder -1,2-propylenglykole beschrieben in Encyclopedia of Polymer Science and Technology loc. cit. und Ullmanns Enzyklopädie der Technischen Chemie, Band XIX, Seite 31 bis 38 (Weinheim 1980). Vorzugsweise haben

Reste der Formel (6) ein Molekulargewicht bis zu 50 000, besonders bevorzugt bis zu 10 000. Ferner sind Mischungen von Resten der Formel (6) bevorzugt, die eine sehr enge Molekulargewichtsverteilung aufweisen, beispielsweise eine Uneinheitlichkeit von > 0,1 (Uneinheitlichkeit

$$= \frac{M_w}{M_n} - 1).$$

In derartigen Mischungen weisen die Reste der Formel (6) vorzugsweise Molekulargewichte bis $10^6$ auf, besonders bevorzugt bis 10 000.

Bevorzugte Hydroxyphenylurethane der Formel (3) sind:

1,5-Bis-(4-hydroxyphenylcarbamoyloxy)-3-methylpentan,

α,ω-Bis-(4-hydroxyphenylcarbamoyloxy)-n-alkan mit $C_6$- bis $C_{30}$-n-alkan, vorzugsweise $C_8$- bis $C_{20}$-n-alkan,

2,5-Bis-(4-hydroxyphenylcarbamoyloxy)-hexan,

1,3-Bis-(4-hydroxyphenylcarbamoyloxy)-2-methyl-2-(1-propyl propan),

1,3-Bis-(4-hydroxyphenylcarbamoyloxy)-2,2-diethylpropan,

1,3-Bis-(4-hydroxyphenylcarbamoyloxy)-2-ethylhexan,

1,3-Bis-(4-hydroxyphenylcarbamoyloxy)-2,2,4-trimethylpentan,

1,6-Bis-(4-hydroxyphenylcarbamoyloxy)-2,2,4-trimethylhexan,

1,12-Bis-(4-hydroxyphenylcarbamoyloxy)-octadecan,

1,3-Bis-(4-hydroxyphenylcarbamoyloxy)-2-(1-propoxy)-propan,

1,6-Bis-(4-hydroxyphenylcarbamoyloxy)-perfluorhexan,

1,16-Bis-(4-hydroxyphenylcarbamoyloxy)-8-hexadecen,

α,ω-Bis-(4-hydroxy-3,5-dimethyl-phenyl-carbamoyloxy)-n- alkan mit $C_6$- bis $C_{30}$-n-alkan, vorzugsweise mit $C_8$- bis $C_{20}$-n-alkan,

1,12-Bis-(4-hydroxy-3,5-dimethyl-phenyl-carbamoyloxy)-octadecan,

1,12-Bis-(3,5-di-tert.-butyl-4-hydroxyphenylcarbamoyloxy)-octadecan,

α,ω-Bis-(4-hydroxy-3,5-dimethyl-phenyl-carbamoyloxy)-n-alkan mit $C_6$- bis $C_{30}$-n-alkan, vorzugsweise mit $C_8$- bis $C_{20}$-n-alkan,

α,ω-Bis-(3,5-dichlor-4-hydroxyphenyl-carbamoyloxy)-n-alkan mit $C_6$- bis $C_{30}$-n-alkan, vorzugsweise mit $C_8$- bis $C_{20}$-n-alkan,

α,ω-Bis-(3,5-di-tert.-butyl-4-hydroxy-phenylcarbamoyl)-n-alkan mit $C_{10}$- bis $C_{30}$-n-alkan, vorzugsweise mit $C_{10}$- bis $C_{20}$-n-alkan,

1,12-Bis-(3,5-dichlor-4-hydroxyphenyl-carbamoyloxy)-octadecan,

1,12-Bis-(2,3,5,6-tetrachlor-4-hydroxy-phenylcarbamoyloxy)-octadecan,

1,12-Bis-(3-hydroxyphenylcarbamoyloxy)-octadecan,

α,ω-Bis-(3-hydroxyphenylcarbamoyloxy)-n-alkan mit $C_6$- bis $C_{30}$-n-alkan, vorzugsweise mit $C_8$- bis $C_{20}$-n-alkan,

α,ω-Bis-(4-chlor-3-hydroxyphenyl-carbamoyloxy)-n-alkan mit $C_6$- bis $C_{30}$-n-alkan, vorzugsweise mit $C_8$- bis $C_{20}$-n-alkan,

α,ω-Bis-(2,4-dichlor-3-hydroxyphenyl-carbamoyloxy)-n-alkan mit $C_6$- bis $C_{30}$-n-alkan, vorzugsweise mit $C_8$- bis $C_{20}$-n-alkan,

1,9-Bis-(4-hydroxyphenylcarbamoyloxy)-5-oxanonan,

1,13-Bis-(4-hydroxyphenylcarbamoyloxy)-5,9-dioxanonan,

1,7-Bis-(4-hydroxyphenylcarbamoyloxy)-4-oxaheptan,

1,11-Bis-(4-hydroxyphenylcarbamoyloxy)-4,7-dioxaundecan,

1,11-bis-(3,5-di-tert.-butyl-4-hydroxyphenyl-carbamoyloxy)-4,7-dioxaundecan,

1,9-bis-(3-hydroxyphenylcarbamoyloxy)-5-oxanonan,

1-(4-Hydroxyphenylcarbamoyloxy)-5-hydroxy-3-methylpentan,

α-(4-Hydroxyphenylcarbamoyloxy)-ω-hydroxy-n-alkan mit $C_6$- bis $C_{30}$-n-alkan, vorzugsweise mit $C_6$- bis $C_{20}$-n-alkan,

1-(4-Hydroxyphenylcarbamoyloxy)-2,2-diethyl-3-hydroxypropan,

1-(4-Hydroxyphenylcarbamoyloxy)-3-hydroxy-2-methyl-2-(1-propyl)-propan,

1-(4-Hydroxyphenylcarbamoyloxy)-2-ethyl-3-hydroxyhexan,

6-(4-Hydroxyphenylcarbamoyloxy)-1-hydroxy-2,2,4-trimethylhexan,

1-(4-Hydroxyphenylcarbamoyloxy)-12-hydroxy-octadecan,

6-(4-Hydroxyphenylcarbamoyloxy)-1,2-dihydroxyhexan,

1-(4-Hydroxyphenylcarbamoyloxy)-3-hydroxy-2,2-bis-(hydroxymethyl)-propan,

1-(4-Hydroxyphenylcarbamoyloxy)-6-hydroxyperfluorhexan,

α-(3,5-Di-tert.-butyl-4-hydroxyphenylcarbamoyloxy)-ω-hydroxy-n-alkan mit $C_6$- bis $C_{30}$-n-alkan, vorzugsweise mit $C_6$- bis $C_{20}$-n-alkan,

1-(3,5-Di-tert.-butyl-4-hydroxyphenylcarbamoyloxy)-12-hydroxyoctadecan,

α-(3,5-Dichlor-4-hydroxyphenylcarbamoyloxy)-ω-hydroxy-n-alkan mit $C_6$- bis $C_{30}$-n-alkan, vorzugsweise mit $C_6$- bis $C_{20}$-n-alkan,

1-(3,5-Dichlor-4-hydroxyphenylcarbamoyloxy)-12-hydroxyoctadecan,
α-(3-Hydroxyphenylcarbamoyloxy)-ω-hydroxy-n-alkan mit $C_6$- bis $C_{30}$-n-alkan, vorzugsweise mit $C_6$- bis $C_{20}$-n-alkan,
1-(3-Hydroxyphenylcarbamoyloxy)-12-hydroxy-octadecan,
1-(4-Hydroxyphenylcarbamoyloxy)-7-hydroxy-4-oxa-heptan,
1-(4-Hydroxyphenylcarbamoyloxy)-9-hydroxy-5-oxanonan und
1-(3,5-Di-tert.-butyl-4-hydroxyphenylcarbamoyloxy)-9-hydroxy-5-oxanonan,
sowie solche der Formeln (19) bis (47):

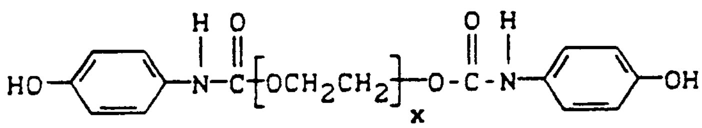

(19)

x = 3 bis 220, vorzugsweise 3 bis 10.

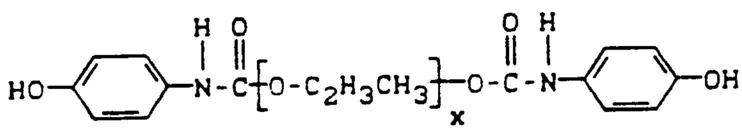

(20)

x = 3 bis 110, vorzugsweise 3 bis 10.

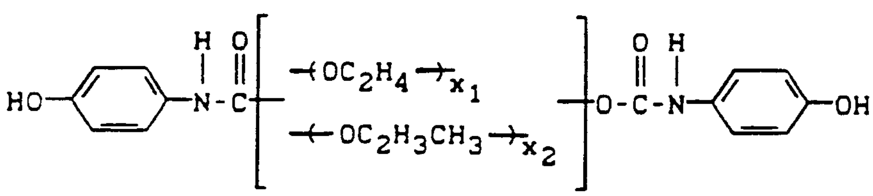

(21)

$x_1$ = 1 bis 200, $x_2$ = 1 bis 100, $x_1 + x_2$ = 4 bis 200, als statistisch verteiltes Copolymer oder als Block-Copolymer.

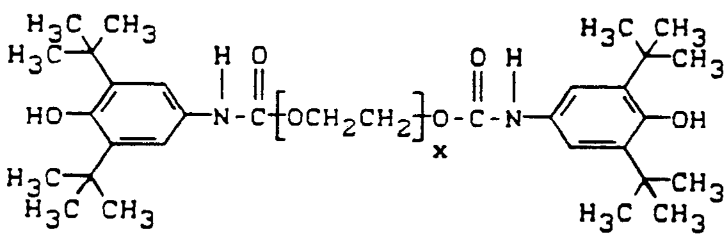

(22)

x = 3 bis 220, vorzugsweise 3 bis 10.

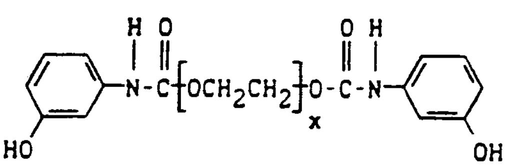

(23)

x = 3 bis 220, vorzugsweise 3 bis 10.

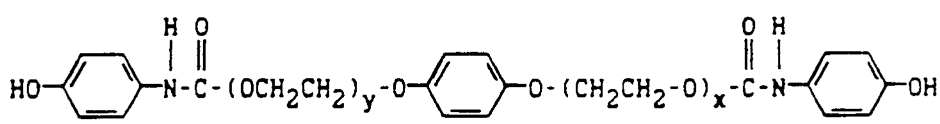

(24)

x und y gleich oder verschieden, x + y = 2 bis 200, vorzugsweise x = y = 1 oder 2.

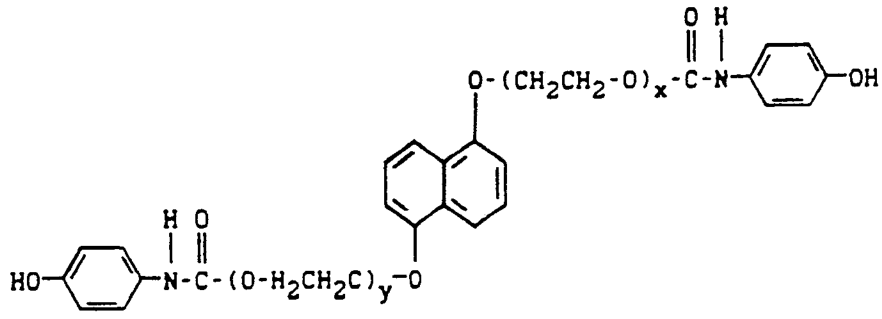

(25)

x und y gleich oder verschieden, x + y = 2 bis 200, vorzugsweise x = y = 1 oder 2.

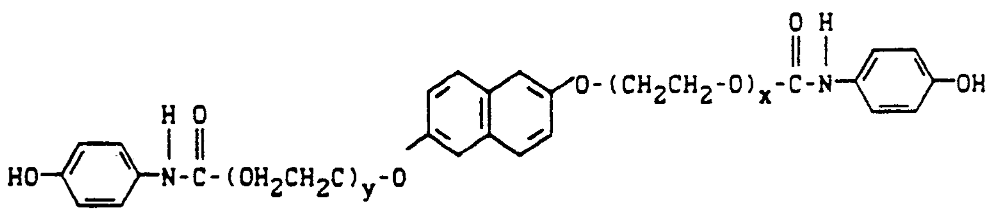

(26)

x und y gleich oder verschieden, x + y = 2 bis 200, vorzugsweise x = y = 1 oder 2.

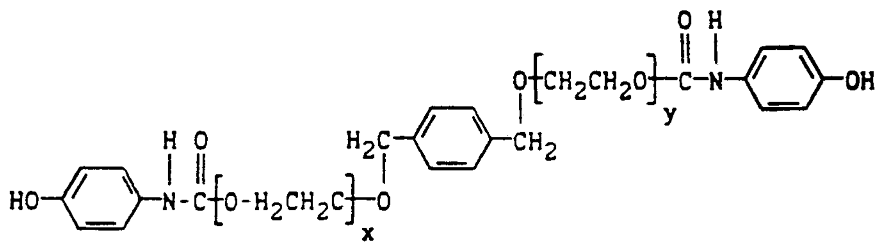

(27)

x und y gleich oder verschieden, x + y = 2 bis 200, vorzugsweise x = y = 1 oder 2.

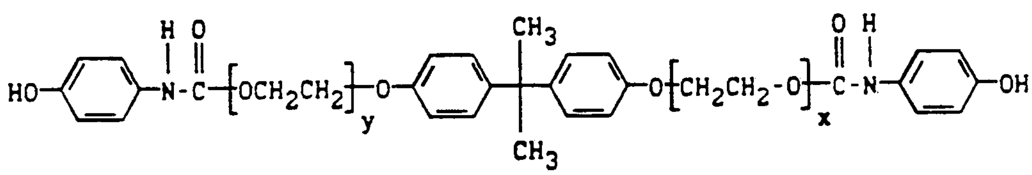

(28)

x und y gleich oder verschieden, x + y = 2 bis 200, vorzugsweise x = y = 1 oder 2.

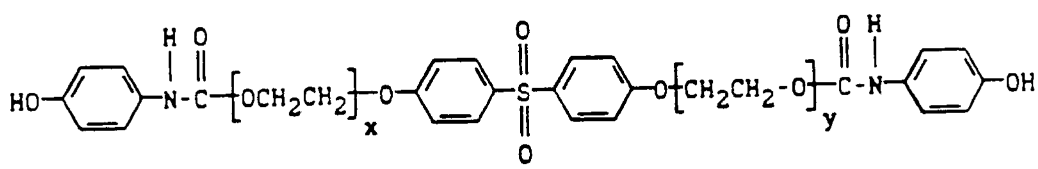

(29)

x und y gleich oder verschieden, x + y = 2 bis 200, vorzugsweise x = y = 1 oder 2.

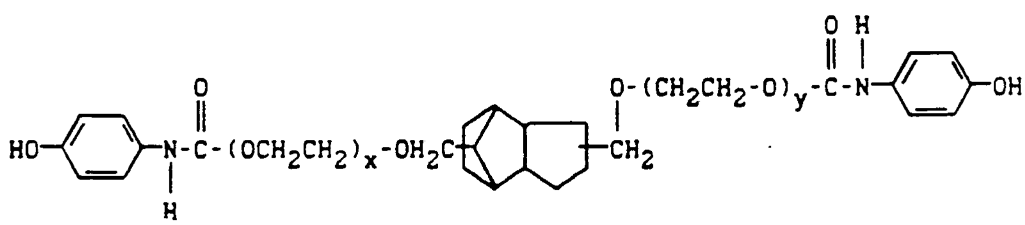

(30)

x und y gleich oder verschieden, x + y = 2 bis 200, vorzugsweise x = y = 1 oder 2.

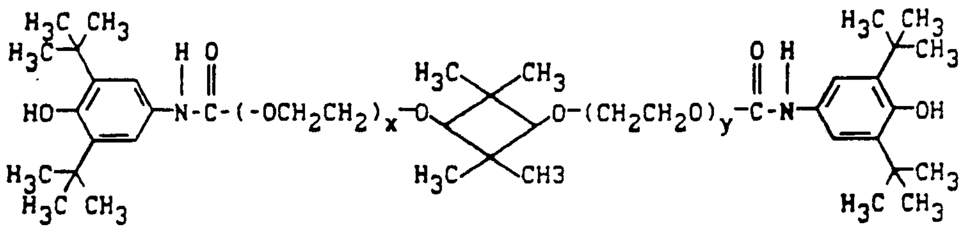

(31)

x und y gleich oder verschieden, x + y = 2 bis 200, vorzugsweise x = y = 1 oder 2, Konfiguration am Cyclobutanring: cis und/oder trans.

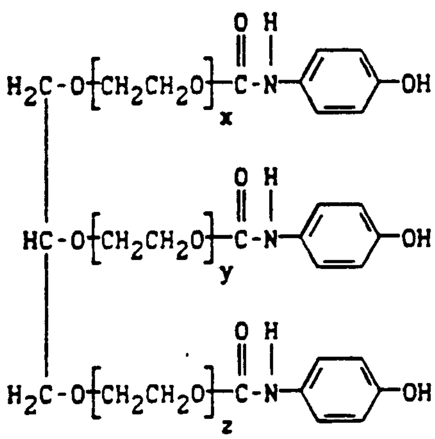

(32)

x und y gleich oder verschieden, x + y + z = 2 bis 200, vorzugsweise x + y + z = 3 bis 20.

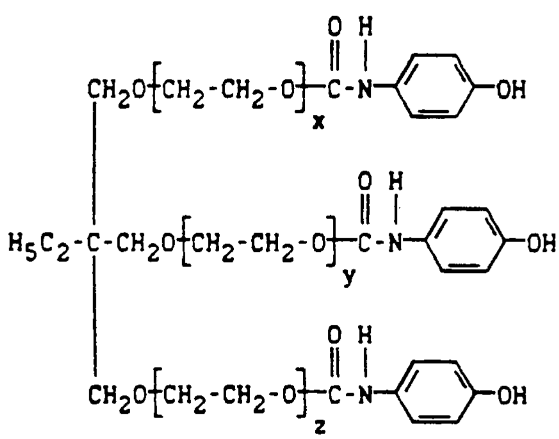

(33)

x und y gleich oder verschieden, x + y + z = 2 bis 200, vorzugsweise x + y + z = 3 bis 20.

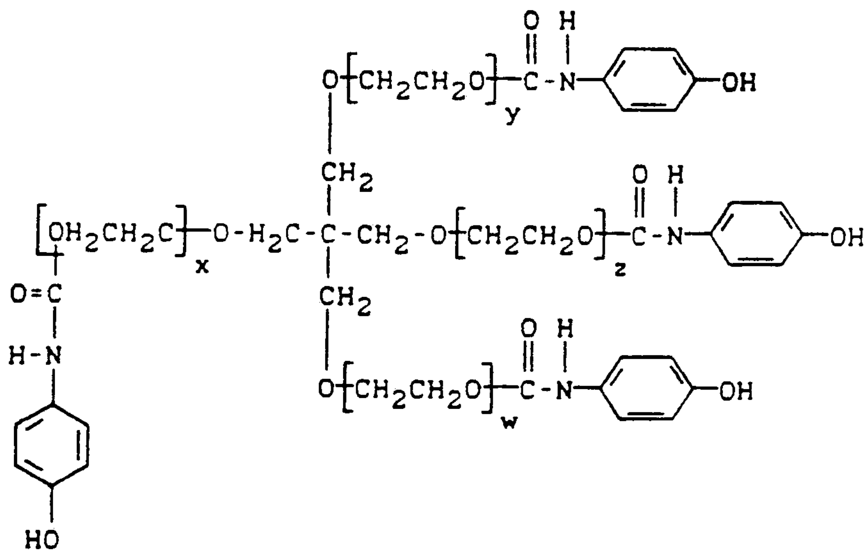

(34)

w, x, y und z gleich oder verschieden, w + x + y + z = 2 bis 200, vorzugsweise w + x + y + z = 4 bis 20.

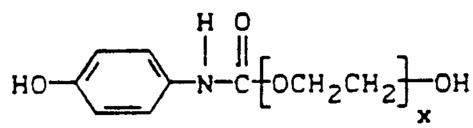

(35)

x = 3 bis 220, vorzugsweise x = 3 bis 10.

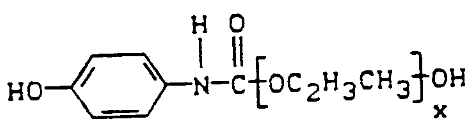

(36)

x = 3 bis 170, vorzugsweise x = 3 bis 10.

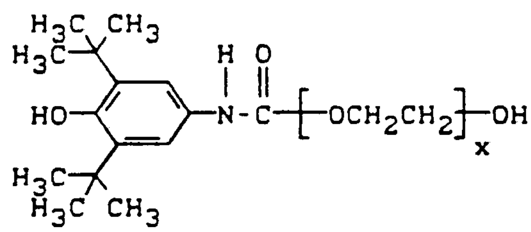

(37)

x = 3 bis 220, vorzugsweise x = 3 bis 10.

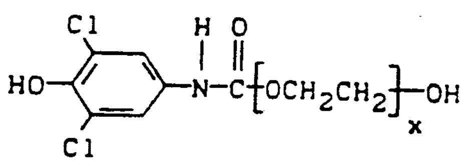

(38)

x = 3 bis 220, vorzugsweise x = 3 bis 10.

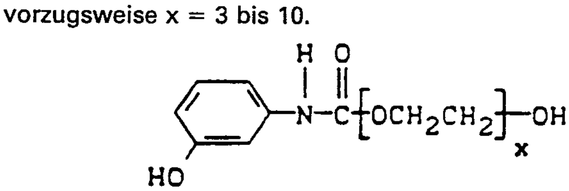

(39)

x = 3 bis 220, vorzugsweise x = 3 bis 10.

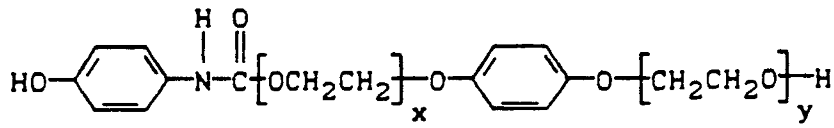

(40)

x und y gleich oder verschieden, x + y = 2 bis 200, vorzugsweise x = y = 1 oder 2.

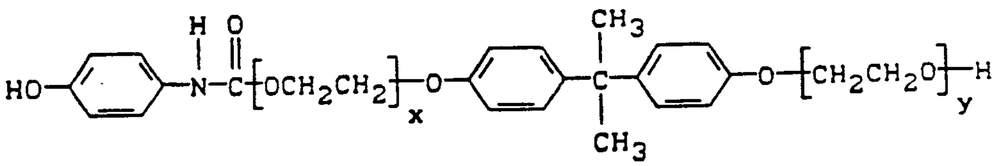

(41)

x und y gleich oder verschieden, x + y = 2 bis 200, vorzugsweise x = y = 1 oder 2.

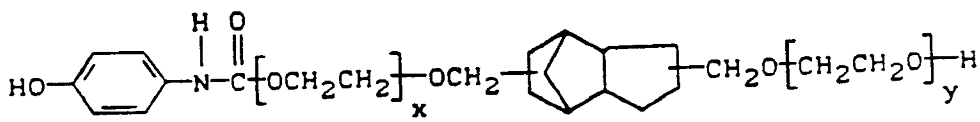

(42)

x und y gleich oder verschieden, x + y = 2 bis 200, vorzugsweise x = y = 1 oder 2.

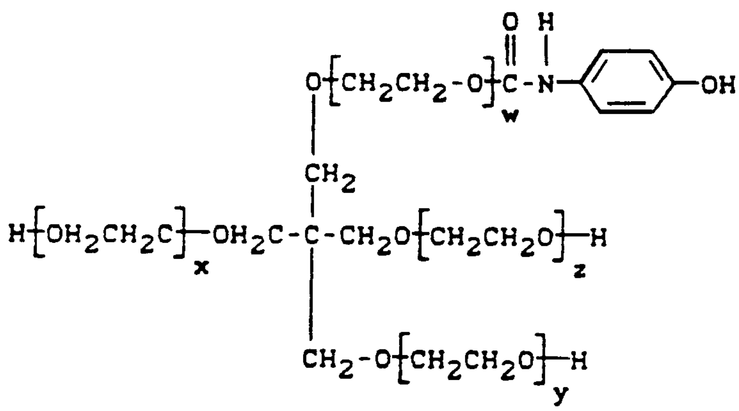

(43)

w, x, y und z gleich oder verschieden, w + x + y + z = 2 bis 200, vorzugsweise w + x + y + z = 4 bis 20.

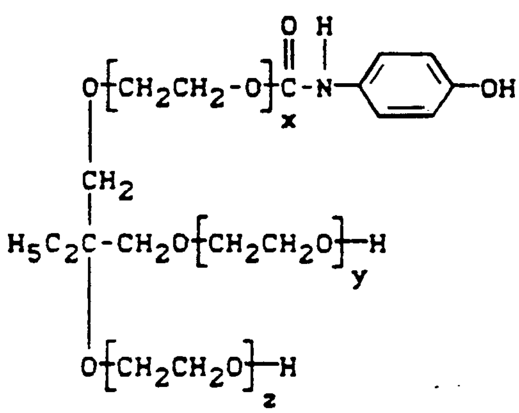

(44)

x, y und z gleich oder verschieden, x + y + z = 2 bis 200, vorzugsweise x + y + z = 3 bis 20.

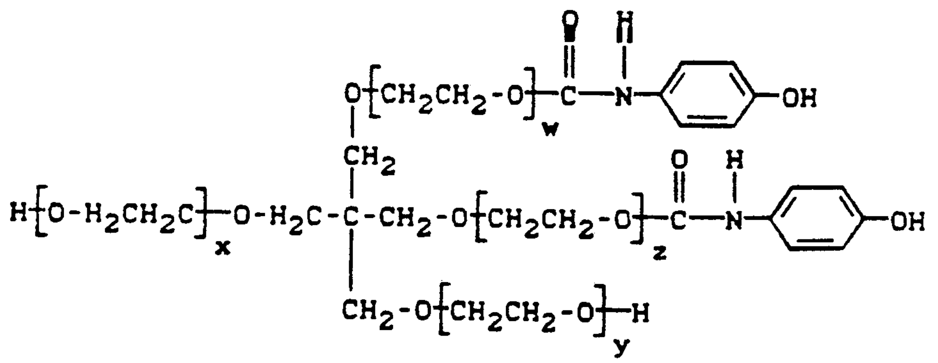

(45)

w, x, y und z gleich oder verschieden, w + x + y + z = 2 bis 200, vorzugsweise w + x + y + z = 4 bis 20.

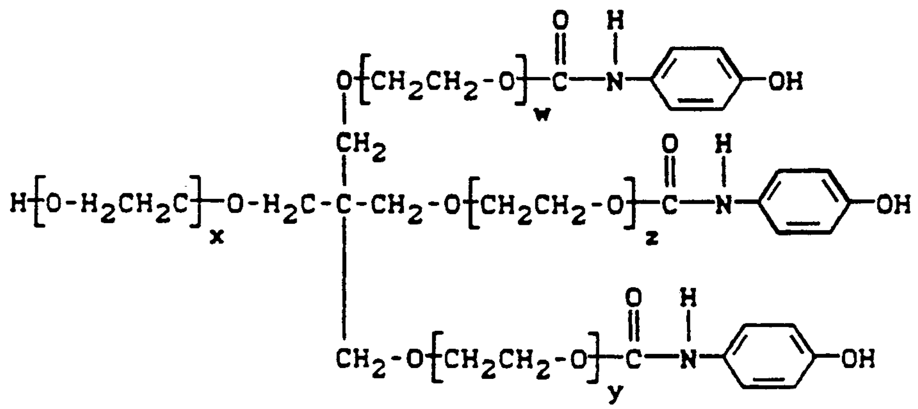

(46)

w, x, y und z gleich oder verschieden, w + x + y + z = 2 bis 200, vorzugsweise w + x + y + z = 4 bis 20.

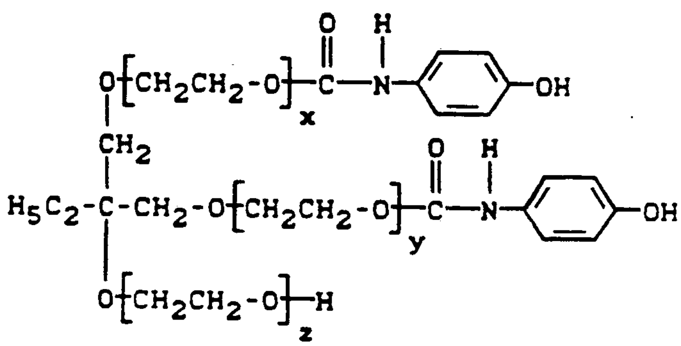

(47)

x, y und z gleich oder verschieden, x + y + z = 2 bis 200, vorzugsweise x + y + z = 3 bis 20.

Es sind auch solche Hydroxyphenylurethane der Formel (3) bevorzugt, die den zuvor angeführten entsprechen, bei dene jedoch R' für Alkyl, Acyl oder Phenyl steht, insbesondere für Alkyl und ganz besonders für Methyl oder Ethyl.

Besonders bevorzugte Hydroxyphenylurethane der Formel (3) sind α,ω-Bis-(4-hydroxyphenylcarbamoyloxy)-n-alkan mit $C_8$—$C_{20}$-n-alkan, 1,3-Bis-(4-hydroxyphenylcarbamoyloxy)-2-methyl-2-(1-propyl)-propan, 1,4-Bis-(4-hydroxyphenylcarbamoyloxy)-2,2-diethylpropan, 1,3-Bis-(4-hydroxyphenylcarbamoyloxy)-2-ethylhexan, 1,3-Bis-(4-hydroxyphenylcarbamoyloxy)-2,2,4-trimethylpentan, 1,12-Bis-(4-hydroxyphenylcarbamoyloxy)-octadecan, 1,12-Bis-(3,5-di-tert.-butyl-4-hydroxyphenylcarbamoyloxy)-octadecan, α,ω-Bis-(4-hydroxy-3,5-trimethyl-phenylcarbamoyloxy)-n-alkan mit $C_8$- bis $C_{20}$-n-alkan, 1,12-Bis-(3-hydroxyphenylcarbamoyloxy)-octadecan, α,ω-Bis-(3-hydroxyphenylcarbamoyloxy)-n-alkan mit $C_8$- bis $C_{20}$-n-alkan, α-(4-Hydroxyphenylcarbamoyloxy)-ω-hydroxy-n-alkan mit $C_6$- bis $C_{20}$-n-alkan, 1-(4-Hydroxyphenylcarbamoyloxy)-2,2-diethyl-3-hydroxypropan, 1-(4-Hydroxyphenylcarbamoyloxy)-3-hydroxy-2-methyl-2-(1-propyl)-propan, 1-(4-Hydroxyphenylcarbamoyloxy)-2-ethyl-3-hydroxy-hexan, 6-(4-Hydroxyphenylcarbamoyloxy)-1-hydroxy-2,2,4-trimethylhexan, 1-(4-Hydroxyphenylcarbamoyloxy)-12-hydroxyoctadecan, α-(3,5-Di-tert.-butyl-4-hydroxyphenylcarbamoyloxy)-ω-hydroxy-n-alkan mit $C_6$- bis $C_{20}$-n-alkan, 1-(3,5-Di-tert.-butyl-4-hydroxyphenylcarbamoyloxy)-12-hydroxyoctadecan, α-(3-Hydroxyphenylcarbamoyloxy)-ω-hydroxy-n-alkan mit $C_6$- bis $C_{20}$-n-alkan, 1-(3-Hydroxyphenylcarbamoyloxy)-12-hydroxyoctadecan, sowie solche der Formeln (19) bis (22), (24) bis (27), (31) bis (33), (35) bis (37) und (44). Ganz besonders sind unter diesen Verbindungen und Verbindungstypen solche mit Molekulargewichten bis zu 1200 bevorzugt.

Die vorliegende Erfindung betrifft weiterhin ein Verfahren zur Herstellung von neuen Hydroxyphenylurethanen der Formel (3), das dadurch gekennzeichnet ist, daß man Poly-Chlorkohlensäureester der Formel (48)

$$R-(-O-\overset{\overset{\displaystyle O}{\|}}{C}-Cl)_{m+n} \qquad (48),$$

in der

R, m und n die bei Formel (3) angegebene Bedeutung haben,

mit Aminophenolen der Formel (49)

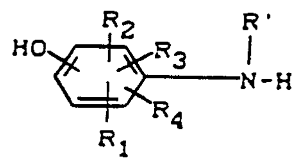

(49),

in der

$R_1$, $R_2$, $R_3$, $R_4$ und R' die bei Formel (3) angegebene Bedeutung haben,

gegebenenfalls in Gegenwart von säurebindenden Mitteln, zu einer Verbindung der Formel (50) umsetzt

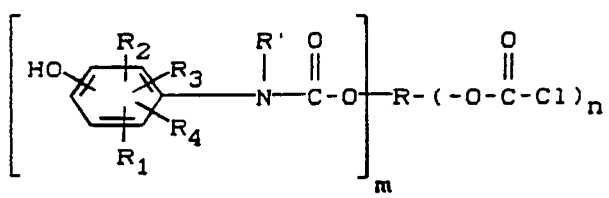

(50)

in der

$R_1$, $R_2$, $R_3$, $R_4$, R', R, m und n die bei Formel (3) angegebene Bedeutung haben und die Verbindung der Formel (50), falls dort n von Null verschieden ist, hydrolysiert.

Verbindungen der Formel (50) mit n = Null sind identisch mit Verbindungen der Formel (3) mit n = Null.

Vorzugsweise wird dieses Verfahren zur Herstellung neuer Hydroxyphenylurethane der Formel (3) angewendet, bei denen n von Null verschieden ist. Ferner ist dieses Verfahren generell zur Herstellung solcher Hydroxyphenylurethane der Formel (3) bevorzugt, die Molekulargewichte von über 1200 aufweisen. Dieses Verfahren kann auch zur Herstellung von Hydroxyphenylurethanen angewendet werden, die nicht der Formel (3) entsprechen, beispielsweise solchen, bei denen R kleinere Reste darstellt, als bei Formel (3) angegeben.

Das für dieses Verfahren benötigte Ausgangsprodukt der Formel (48) kann durch Phosgenierung von Alkoholen der Formel (51)

$$R-(-OH)_{m+n} \qquad (51),$$

in der

R, m und n die bei Formel (3) angegebene Bedeutung haben, erhalten werden. Diese Phosgenierung führt man vorzugsweise mit überschüssigem Phosgen und unter Verwendung von Lösungsmitteln aus. Als Lösungsmittel kommen beispielsweise Methylenchlorid, Chloroform, Aceton, Tetrahydrofuran, Dioxan, Benzol oder Gemische dieser Lösungsmittel in Frage. Man kann auch überschüssiges verflüssigtes Phosgen als Lösugnsmittel einsetzen. Die Artbeitsweise kann analog sein zu der bekannten Herstellung von speziellen Bischlorkohlensäureestern, wie sie beispielsweise bei Stille, Campbell (ed), High Polymers, Vol. 27, "Condensation Monomers" (New York 1972), S. 287 bis 295 und im US-Patent 2 757 191 beschrieben sind.

So hergestellte Polychlorkohlensäureester der Formel (48) werden vorzugsweise ohne Reinigung oder Isolierung, aber nach Ausblasen von überschüssigem Phosgen, vorzugsweise in den vorliegenden Lösungsmittel mit Aminophenolen der Formel (50) umgesetzt, welche als Feststoff, in suspendierter Form

oder in Lösung vorliegen können. Geeignete Temperaturen sind beispielsweise solche im Bereich von −10 bis +80°C, vorzugsweise solche im Bereich von +10 bis +50°C. Wenn in Hydroxyphenylurethan der Formel (3) mit einem bestimmten Wert für m hergestellt werden soll, so wählt man die entsprechende Verbindung der Formel (48) und setzt diese mit so viel eines Aminophenols der Formel (49) um, daß pro Mol umzusetzender Chlorkohlensäuregruppen in einer Verbindung der Formel (48) m Mole Aminophenol (49) vorhanden sind oder die 0,8- bis 1,2-fache molare Menge davon. Falls kein säurebindendes Mittel eingesetzt wird, ist es zweckmäßig, das Aminophenol (49) in der 1,5- bis 2,5-fachen der vorstehenden Mengen einzusetzen.

Vorzugsweise wird dieses Verfahren in Gegenwart säurebindender Mittel durchgeführt, beispielsweise tertiärer Amine oder Carbonate oder Hydrogencarbonate der Alkali- und/oder Erdalkalimetalle. Solche säurebindenden Mittel können beispielsweise in stöchiometrischer Menge oder in einem Überschuß von bis zu 100 Mol-% eingesetzt werden und gegebenenfalls in suspendierter Form vorliegen. Dem ersten Schritt dieses Verfahrens entsprechendes analoges Verfahren zur Herstellung einfacher Hydroxyphenylurethane sind beispielsweise in der DE—OS 25 14 540 und in der DE—OS 16 43 763 beschrieben.

Werden nach diesem Verfahren Hydroxyphenylurethane der Formel (3) mit n = Null hergestellt, so kann die Aufarbeitung des Reaktionsgemisches unmittelbar nach der Reaktion erfolgen, beispielsweise indem man das Lösungsmittel durch Destillation entfernt, den Rückstand mit Wasser, Salzsäure und/oder Methanol wäscht und anschließend umkristallisiert, umfällt oder sublimiert.

Werden nach dem zuvor beschriebenen Verfahren Hydroxyphenylurethane oder Formel (3) mit n ≠ Null hergestellt, so wird das Reaktionsgemisch zunächst unter Bedingungen, bei welchen die noch vorhandenen Chlorkohlensäureestergruppen hydrolysieren und unter $CO_2$- und HCl-Abspaltung in OH-Funktionen übergehen, behandelt. Beispielsweise kann man hierzu Wasser zugeben und auf 50 bis 100°C erhitzen. Die Hydrolysereaktion läuft jedoch im allgemeinen besser ab, wenn man basisch wirkende Substanzen oder verdünnte Laugen hinzufügt, beispielsweise Alkalicarbonate. Vorzugsweise wendet man basische Substanzen in Mengen an, die in dem gegebenenfalls zweiphasigen Reaktionsmedium einen pH-Wert im Bereich von 7,2 bis 10,5 ergeben. Die weitere Aufarbeitung des Reaktionsgemisches kann dann wie oben beschrieben erfolgen.

Die vorliegende Erfindung betrifft weiterhin Hydroxyphenylurethangruppen enthaltende Chlorkohlensäureester der Formel (50), bei denen n von Null verschieden ist, die beispielsweise in Substanz, als Lösungen und/oder als Suspensionen vorliegen können. Bevorzugt sind Verbindungen der Formel (50), bei denen m = n = 1 ist. Solche Verbindungen der Formel (50) können nach der ersten Stufe des zuvor beschriebenen Verfahrens unter Vermeidung von Hydrolysebedingungen aus dem Reaktionsgemisch erhalten werden.

Beispielsweise kann man das Reaktionsgemisch dazu von festen Nebenprodukten (z.B. Alkalichloriden) abfiltrieren und sie durch schonendes Abdampfen des Lösungsmittels aus dem Filtrat gewinnen oder durch Zutropfen des Filtrates in ein Non-Solvent. Solche Produkte der Formel (50), die als Feststoff anfallen, können durch Filtration aus dem Reaktionsgemisch entfernt und aus dem so isolierten Festprodukt mit einem geeigneten Lösungsmittel selektiv aufgenommen werden.

Die so isolierten Verbindungen der Formel (50) mit von Null verschiedenem n können gegebenenfalls weiter gereinigt werden, beispielsweise durch Extraktion, Kristallisation, Umfällen oder Vakuumsublimation. Verbindungen der Formel (50) sind im allgemeinen unter Zersetzung schmelzende Substanzen oder viskose Flüssigkeiten und IR-spektroskopisch durch das Auftreten von Banden bei 3300 bis 3350 $cm^{-1}$, be 1750 bis 1800 $cm^{-1}$ und bei 1590 bis 1650 $cm^{-1}$ charakterisiert. Die neuen Hydroxyphenylurethanchlorkohlensäureester der Formel (50) sind beispielsweise Zwischenprodukte zur Herstellung von Hydroxyphenylurethanen der Formel (3). Sie können auch für di entsprechende Herstellung von solchen Urethanen verwendet werden, die andere, als von der Formel (3) umfaßte oder im Substitutionsmuster verschiedenartige Hydroxyphenyl-carbamoyl-Reste enthalten.

Die neuen Hydroxyphenylurethane der Formel (3) können auch durch weitere, an sich bekannte Verfahren hergestellt werden, beispielsweise indem man Hydroxyphenylisocyanate mit Alkoholen der Formel (51) umsetzt und dabei ähnlich wie in der US-PS 3 933 470 beschrieben vorgeht. Ferner ist es möglich, anstelle des Isocyanates das entsprechende Hydroxyphenylcarbaminsäurechlorid zu verwenden und dieses, vorzugsweise in Gegenwart von säurebindenden Mitteln, mit Alkoholen der Formel (51) umzusetzen.

Die Herstellung der neuen Hyeroxyphenylurethane der Formel (3) erfolgt bevorzugt aus Polychlorkohlensäureestern der Formel (48) durch Umsetzung mit Aminophenolen der Formel (49) über die Zwischenprodukte der Formel (50) und gegebenenfalls deren Hydrolyse.

Die erfindungsgemäßen Hydroxyphenylurethane der Formel (3) sind auch noch durch weitere Verfahren, z.B. aus bestimmten Harnstoff- bzw. Urethangruppen enthaltenden Verbindungen durch Umesterungsreaktionen zugänglich. Bevorzugte Ausführungsformen solcher Herstellungsverfahren sind in den Beispielen enthalten.

Die neuen Hydroxyphenylurethane der Formel (3) zeichnen sich durch eine überraschend hohe, bei mindestens 250°C liegende Zersetzungstemperatur aus. Hierdurch wird eine Verarbeitung bei entsprechend hohen Temperaturen möglich. Diese Thermostabilität ist ungewöhnlich, da der Zersetzungsbeginn Urethangruppen enthaltender Verbindungen üblicherweise im Temperaturebereich

zwischen 200 und 250°C liegt. Demgemäß können die neuen Hydroxyphenylurethane der Formel (3) mit Vorteil bei der Herstellung von beispielsweise Polykondensaten, Polyestern und Polycarbonaten, sowie zur Herstellung von Polyaddukten, z.B. Polyurethanen, verwendet werden.

Selbst Anwendungen, die für Urethangruppen enthaltende, mehrfach funktionelle Monomere wegen zu geringer Thermostabilität bisher nicht möglich waren, z.B. die Schmelzkondensation und die Herstellung hochschmelzender Polykondensate, sind mit den neuen Hydroxyphenylurethanen der Formel (3) möglich. Spezielle Anwendungen sind beispielsweise folgende:

Gemäß der EP—OS 157 732 werden bisphenolische Verbindungen mit linearer Alkylengruppe zur Herstellung von vernetzbaren, linearen Polyetherharzen benötigt (dort Verbindungen der Formel (VI)). An ihrer Stelle können die neuen erfindungsgemäßen Hydroxyphenylurethane der Formel (3) mit $m = 2$ und $n$ = Null mit Vorteil verwendet. Diese sind im allgemeinen leichter zugänglich un somit wirtschaftlicher als die in der genannten Literatur verwendeten α,ω-Di-(p-hydroxyphenyl)-alkane. Zudem kann durch Zugabe oder Mitverwendung von erfindungsgemäßen Hydroxyphenylurethanen der Formel (3) mit $m > 2$ die gewünschte Vernetzung des Polykondensates erreicht werden. Abweichend von der dort gegebenen Polykondensationsvorschrift werden bei Verwendung erfindungsgemäßer Hydroxyphenylurethane vorzugsweise starke organische Basen, z.B. tertiäre Amine, anstelle der alkalischen Hilfsstoffe verwendet. Beispielsweise sind hierfür Triethylamin, Tri-n-butylamin, N,N,N',N'-Tetramethyl-1,2-ethylendiamin, N,N-Diethylanilin, Pyridin, Picoline, Lutidine, Chinolin, Isochinolin oder Chinaldin allein oder in beliebigen Mischungen untereinander geeignet.

Die erfindungsgemäßen Hydroxyphenylurethane der Formel (3) mit $n$ = Null sind beispielsweise auch für die Herstellung Urethangruppen-modifizierter Alkydharze mit Anwendungen für Lacke und Beschichtungen geeignet. Durch Verwendung von Verbindungen der Formel (3) mit hinreichend langen Polyethereinheiten im Rest R können wassermischbare oder wasserverträgliche Lacksysteme aufgebaut werden.

Neue Hydroxyphenylurethane der Formel (3), deren phenolische OH-Gruppen an beiden ortho-Positionen mit Alkylresten mit je 3 oder mehr C-Atomen besetzt sind, sind für die zuvor beschriebenen Anwendungen weniger geeignet, da solche OH-Gruppen allenfalls nur mit größeren Schwierigkeiten unter Bildung von Polymerketten reagieren können. Derartige Verbindungen der Formel (3) sind jedoch als Alterungsschutzmittel und Oxidationsinhibitoren für Polymere geeignet. Beispielsweise können Verbindungen der Formel (3.1)

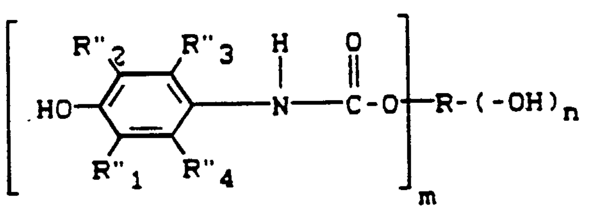

(3.1),

in der

$R''_1$ und $R''_2$ für Alkyl, vorzugsweise für tert.-Butyl, stehen,

$R''_3$ und $R''_4$ die bei Formel (3) für $R_3$ und $R_4$ angegebene Bedeutung haben und R, m und n die bei Formel (3) angegebene Bedeutung haben, als Alterungsschutzmittel und/oder Antioxidantien verwendet werden. Insbesondere können Verbindungen der Formel (3.1) mit $n$ = Null, $R''_1$ und $R''_2$ = tertiär Butyl und mit Molekulargewichten von > 400 vorteilhaft als Antioxidantien verwendet werden, wie sie zur Herstellung thermisch stabilisierter Polyetherimide, z.B. gemäß EP—OS 158 734, benötigt werden. Verbindungen der Formel (3.1) mit $n \neq$ Null können über die in der Anzahl n vorhandenen, alkoholischen OH-Gruppen direkt reaktiven Endgruppen in Polymeren, z.B. Carbonsäure-, Carbonsäurechlorid-, Chlorkohlensäureester-, Carbonsäureester- oder Isocyanatgruppen umgesetzt werden. Sie können so als chemisch gebundene, nicht-flüchtige Antioxidantien oder Alterungsschutzmittel dienen. Vorzugsweise werden für diese Anwendung Verbindungen der Formel (3.1) mit $R''_1$ und $R''_2$ = tertiär Butyl und $n = 1$ verwendet.

Die folgenden Beispiele illustrieren Herstellungsverfahren, Eingenschaften und Anwendungen neuer erfindungsgemäßer Verbindungen, ohne die Erfindung auf diese Ausführungsformen zu beschränken.

Beispiele

Allgemeines:

Die hergestellten neuen Verbindungen wurden durch Elementaranalyse, durch Massenspektrometrie (Direktverdampfung, EI), durch IR-Spektroskopie (KBr-Preßling) und durch 1 H-NMR-Spektroskopie (gelöst in $d_6$-Aceton oder $d_6$-DMSO) charakterisiert. Von festen Substanzen wurde der Schmelzpunkt bestimmt.

Die erfindungsgemäßen neuen Verbindungen weisen die folgenden gemeinsamen spektroskopischen Eigenschaften auf:

Massenspektrometrie:

Molekülion $[M]^+$: meist sehr schwach. $[HO—Ar—N=C=O)^+$ und/oder $[HO—Ar—NH_2]^+$ (Ar steht für Aryl entsprechend dem Arylrest in Formel (3)), meist stark.

IR-Spektroskopie

Charakteristische Banden bei 3200 bis 3500 $cm^{-1}$ und 1690 bis 1730 $cm^{-1}$.

1 H-NMR-Spektroskopie (für die 4-Hydroxyphenylcarbamoyloxyderivate):

| | | |
|---|---|---|
| phenolisches H: | 7,5—8,3 ppm | in Aceton, soweit darin nicht genügend löslich |
| Urethan-H: | 8,1—8,6 ppm | in DMSO bei $\Delta\delta$ = 0,8 ppm tieferem Feld |
| AA'BB'-System: ("Quartett") | | $\delta\gamma_A$ 6,6—6,9 ppm<br>$\delta\gamma_B$ 7,15—7,35 ppm<br>$J_{AB}$ 9 Hz |

Beispiel 1

Herstellung von Bisurethanen durch Umesterung mit α.ω-Alkandiolen in Gegenwart von Chinolin als Katalysator

In einer Rührapparatur mit 20 cm Vigreux-Kolonne und Destillationsaufsatz wurden 21,8 g (0,125 Mol) 1,10-Decandiol und 45,3 g (0,250 Mol) N-(4-Hydroxyphenyl)-ethylcarbamat in 300 g ortho-Dichlorbenzol vorgelegt und 2 Stunden am Rückfluß erhitzt. Danach wurde anfallendes Ethanol abdestilliert. Bei nachlassendem Ethanolanfall — ca. 4 Stunden nach Beginn der Abnahme — wurden 3,8 g Chinolin zugegeben, wonach wiederum Ethanol abdestilliert wurde. Nachdem kein Ethanol mehr überging, wurde abgekühlt, der ausgefallene Feststoff abgesaugt und dieser in 200 ml Aceton aufgerührt. Nach Absaugen und Trocknen wurden 47,8 g (= 86% Ausbeute) 1,10-Bis-(4-hydroxyphenylcarbamoyloxy)-decan mit einem Schmelzpunkt von 198°C erhalten.

In gleicher Weise wurden weitere α,ω-Alkandiole zu Bisurethanen umgesetzt (Ergebnisse siehe Tabelle 1). Zu Vergleichszwecken wurde nach der gleichen Methode mit 1,4-Butandiol ein Bisurethan hergestellt (Beispiele 1.1 in Tabelle 1).

TABELLE 1

Reaktionsprodukt:

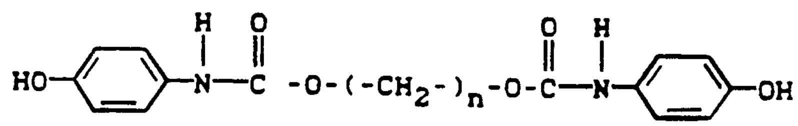

| Beispiel Nr. | n | Ausbeute % | Schmelzpunkt °C |
|---|---|---|---|
| 1.1*) | 4 | 88 | 219—220 |
| 1.2 | 6 | 86 | 220—225 |
| 1.3 | 12 | 88 | 187 |
| 1.4 | 16 | 83 | 188 |
| 1.5**) | 19 | 83 | 173—176 |

*) Vergleichsbeispiel

**) Zur Herstellung des eingesetzten $C_{19}$-Diols siehe Beispiel 3.

Beispiel 2

Nach der Arbeitsweise von Beispiel 1 wurden äquimolare Mengen von weiteren Diolen zu den entsprechenden Bisurethanen umgesetzt. Ergebnisse siehe Tabelle 2.

Die in den Beispielen 2.4 bis 2.7 eingesetzten Diolkomponenten wurden durch Ethoxylierung der entsprechenden phenolischen Dihydroxyverbindungen erhalten.

TABELLE 2

| Beispiel Nr. | Reaktionsprodukt 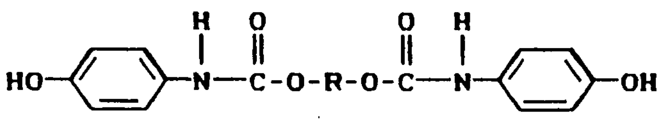 | Ausbeute % | Schmelzpunkt °C |
|---|---|---|---|
| 2.1 | 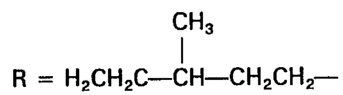 | 78 | 158 |
| 2.2 | 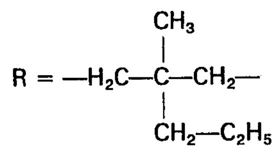 | 55 | 96—100 |
| 2.3 | 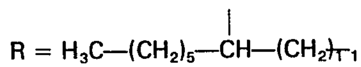 | 88 | 101—105 |
| 2.4 | 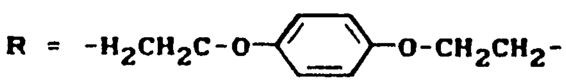 | 80 | 253 |
| 2.5 | 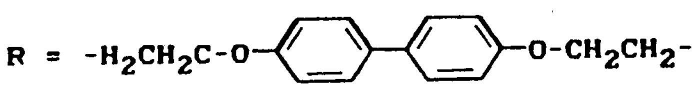 | 83 | 233—239 |

TABELLE 2 (Fortsetzung)

| Beispiel Nr. | Reaktionsprodukt 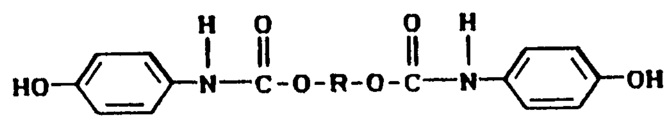 | Ausbeute % | Schmelzpunkt °C |
|---|---|---|---|
| 2.6 | R = 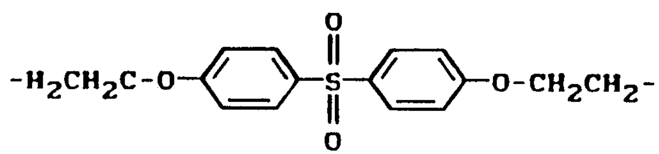 | 77 | 222—225 |
| 2.7 | R = 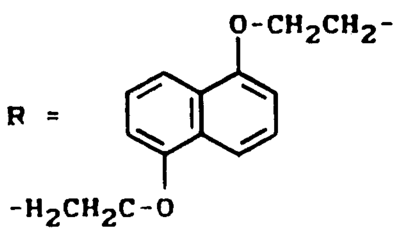 | 83 | 278—82 |

Beispiel 3

Nach der Arbeitsweise von Beispiel 1 wurden 22,5 g (0,075 Mol) "Diol verzweigt" (Herstellung siehe unten) mit 27,15 g (0,15 Mol) N-(4-Hydroxyphenyl)ethylcarbamat umgesetzt. Die erhaltene Reaktionslösung wurde von einem zähviskosen Produkt abgegossen und dieses mit 200 ml Methylenchlorid aufgerührt. Hierbei wurden 4,5 g eines in Methylenchlorid unlöslichen Feststoffes vom Schmelzpunkt 115 bis 132°C erhalten (Produkt A).

Die Methylenchloridphase und die ortho-Dichlorbenzolphase wurden vereinigt, mit 4% iger Salzsäure gewaschen und durch Stehen über $Na_2CO_3$ entsäuert und getrocknet. Nach Entfernen der Lösungsmittel wurden 26,7 g eines rötlichen, zunächst zäh-viskosen, später kirstallisierenden Products vom Schmelzpunkt 50 bis 55°C erhalten (Produkt B).

Die beiden Produkte A und B sind nach ihrer analytischen Charakterisierung Isomere bzw. Isomerengemische Verschiedener Bis-(4-hydroxyphenylcarbamoyloxy)-nonadecane. Ausbeute (Summe der Produkte A und B): 73%.

Herstellung der $C_{19}$-Diole

a) $C_{19}$-Dicarbonsäuredimethylester (Heptadecandicarbonsäuredimethylester) wurden durch Hydrocarboxymethylierung von Ölsäuremethylester unter folgenden Bedingungen gewonnen (siehe auch B. Gruber und M. Biermann; fette, Seifen, Anstrichmittel *87* (1985) 10, S. 400—403):

Einsatzstoffe (Mole):

| | |
|---|---|
| Ölsäuremethylester | (25) |
| Methanol | (50) |
| Pyridin | (15) |
| $Co_2(CO)_8$ | (0,5) |
| Kohlenmonoxid | (1,5), 2 Vol-% $H_2$ enthaltend. |

Reaktionsbedingungen:

150 bar CO (Anfangsdruck bei Raumtemperatur)
185°C Reaktionstemperatur
10 Studen Reaktionszeit

Zur Zerstörung des Katalysators wurde das Reaktionsgemisch in Gegenwart von verdünnter Essigsäure bei 50°C mit Luft behandelt und dann mit dem gleichen Volumen Wasser versetzt. Die organische Phase wurde von Methanol befreit und an einer 1 m Füllkörperkolonne fraktioniert. Die bei 190 bis 200°C (1 mbar) übergehende Fraktion wurde weiterverwendet ("Diester-Isomerengsmisch")).

Zur Trennung wurde das Diester-Isomerengemisch zweimal aus Methanol umkristallisiert. Hierbei wurden pro 100 g Substanz jeweiles 2 l Methanol verwendet. Das Kristallisat war ein Feststoff mit einem Schmelzpunkt von 60—61°C, welches zu 90,5% aus dem linearen α,ω-Diester bestand ("Diester unverzweigt").

Aus der methanolischen Mutterlauge wurde durch Abdestillieren des Methanols ein bei Raumptemperatur flüssiges Produkt erhalten, welches zu 96,5% aus verzweigten $C_{19}$-Diestern ("Diester verzweigt") besteht.

b) $C_{19}$-Diole wurden durch Hydrierung der $C_{19}$-Diester nach Adkins hergestellt. Hierzu wurden die Diester in Gegenwart von 15 Gew.-% pulverförmigem Kupfer-Bariumchromit-Katalysator (48 Gew.-% CuO, 10 Gew.-% BaO und 37 Gew.-% $Cr_2O_3$) bei 250°C unter 250 bar $H_2$ (Anfangsdruck bei Raumptemperatur) innerhalb von 18 Stunden hydriert.

Aus "Diester unverzweigt" wurde so nach Umkristallisation aus Toluol in Gegenwart von Aktivkohle 1,19-Nonadecandiol mit einem Schmelzpunkt von 95 bis 96°C in 80% Ausbeute (bezogen auf eingesetzten Diester) erhalten. Dieses wurde in Beispiel 1.5 eingesetzt. Der "Diester verzweigt" wurde in der gleichen Weise hydriert, in Toluol aufgenommen und heiß über Aktivkohle filtriert. Nach dem Entfernen der Lösungsmittel wurde am Rotationsverdampfer bei 0,8 mbar das Diol mit einem Siedepunkt von 196°C erhalten, welches bei Raumptemperatur teils fest, teils flüssig vorliegt. Die Ausbeute an "Diol verzweigt" betrug 85%, bezogen auf eingesetzten Diester. "Diol verzweigt" wurde in Beispiel 3 eingesetzt.

Beispiel 4

Herstellung von Bisurethanen durch Umesterung mit Polyglykolen als Diolkomponente:

Nach der Arbeitsweise von Beispiel 1 wurden 18,8 g (0,125 Mol) 1,8-Dihydroxy-3,6-dioxaoxtan (Triethylenglykol) mit 45,3 g (0,250 Mol) N-(4-Hydroxyphenyl)-ethylcarbamat umgesetzt. Bei der Aufarbeitung wurde anstelle von Aceton mit warmem Methylenchlorid digeriert. Es wurden 44,7 g (85% Ausbeute) 1,8-Bis-(4-hydroxyphenylcarbamoyloxy)-3,6-dioxaoctan in Form eines zäh-viskosen Produktes erhalten.

In der gleichen Weise wurden weitere Polyglykole zu Bisurethanen umgesetzt, Ergebnis siehe Tabelle 3. Für Vergleichszwecke wurde auch aus Diethylenglykol das Bisurethan hergestellt (Beispiel Nr. 4.1).

TABELLE 3

Reaktionsprodukt:

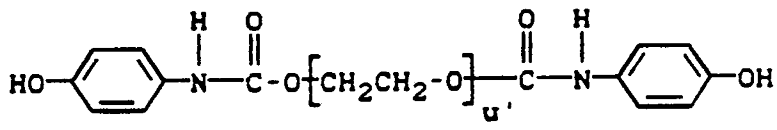

| Beispiel Nr. | u' | Ausbeute (%) | Schmelzpunkt °C oder Konsistenz |
|---|---|---|---|
| 4.1*) | 2 | 83 | 129 |
| 4.2 | 4 | 85 | zäh-viskos |
| 4.3 | 9,5 | 81 | zäh-viskos |
| 4.4**) | 220 | 86 | 62—63 |

*) Vergleichsversuch
**) Ein von BP erhältliches Polyglykol (Breox® 8000) wurde, aus Aceton umkristallisiert, wie folgt charakterisiert ($M_n$: 9700m $M_w$ 10400, Uneinheitlichkeit: 0,072) und als Diol-Komponente eingesetzt.

Das Reaktionsprodukt wurde durch die 1 H-NMR-Spektroskopie als das gewünschte Bisurethan bestätigt. Die Hydroxyphenylcarbamoyl-Endgruppen wurden gegen tert.-Butanol als innerem Stanard in einem Doppelresonanzexperiment (Unterdrückung des Singulettsignals der Methylenprotonen) quantitativ nachgewiesen.

Beispiel 5

Nach der Arbeitsweise von Beispiel 1 wurden 25,3 g (0,125 Mol) 1,12-Dodecandiol mit 45,3 g (0,25 Mol) N-(3-Hydroxyphenyl)-ethylcarbamat umgesetzt. Es wurden 49,0 g (83% Ausbeute) 1,12-Bis-(3-hydroxyphenylcarbamoyloxy)dodecan mit einem Schmelzpunkt von 144°C erhalten.

Beispiel 6

Nach der Arbeitsweise von Beispiel 1 wurden 25,3 g (0,125 Mol) 1,12-Dodecandiol mit 76,8 g (0,25 Mol) N-(3,5-di-tert.-butyl-4-hydroxyphenyl)-1-propylcarbamat unter Abdestillieren von 1-Propanol umgesetzt. Es wurden 61,1 g (67% Ausbeute) 1,12-Bis-(3,5-di-tert.-butyl-4-hydroxyphenylcarbamoyloxy)-dodecan mit einem Schmelzpunkt von 87 bis 89°C erhalten.

Beispiel 7
(Umesterung mit Metallverbindungen als Katalysatoren)

Beispiel 7.1:

In einer Rührapparatur mit 20 cm Vigreux-Kolonne und Destillationsaufsatz wurden 13,8 g (0,08 Mol); 1,10-Decandiol, 28,7 g (0,16 Mol) N-(4-hydroxyphenyl)-ethylcarbamat und 0,3 g Dibutylzinndilaurat in 190 g ortho-Dichlorbenzol vergelegt und 2 Stunden am Rückfluß erhitzt. Danach wurde erschöpfend Ethanol abdestilliert, was ca. 6 Stunden dauerte. Asud dem erkalteten Reaktionsgemisch wurde der ausgefallene Feststoff abgesaugt, mit 4%iger Salzsäure und Wasser gewaschen. Danach wurde der Feststoff in 500 ml Aceton aufgerührt, abgesaugt und getrocknet.

Es wurden 26,7 g (= 76% Ausbeute) 1,10-Bis-(4-hydroxyphenylcarbamoyloxy)-decan mit einem Schmelzpunkt von 196 bis 200°C erhalten.

Beispiel 7.2:

Es wurde wie in Beispiel 7.1 gearbeitet, jedoch wurde an Stelle von Dibutylzinndilaurat 0,3 g Dibutylzinnmethoxid verwendet. Das gewünschte Bisurethan wurde mit ähnlichem Ergebnis erhalten.

Beispiel 7.3:

Es wurde wie in Beispiel 7.1 gearbeitet, jedoch wurde an Stelle von Dibutylzinndilaurat 0,3 g Orthotitansäuretetrabutylester verwendet. Das gewünschte Bisurethan wurde mit ähnlichem Ergebnis erhalten.

Beispiel 8

Herstellung von Dihydroxymonourethanen nach einem speziellen Umesterungsverfahren mit α,ω-Alkandiolen in Gegenwart von Chinolin als Katalysator:

In einer Rührapparatur mit 20 cm Vigreux-Kolonne und Destillationsaufsatz wurden 21.8 g (0,125 Mol) 1,10-Decandiol und 45,3 g (0,250 Mol) N-(4-Hydroxyphenyl)-ethylcarbamat zusammen mit 3,8 g Chinolin in 300 g ortho-Di-chlorbenzol vorgelegt und 25 Stunden am Rückfluß erhitzt. Danach wurde erschöpfend Ethanol abdestilliert (ca. 11 Stunden).

Zu den Reaktionslösung wurden weitere 45 g (0,258 Mol) 1,10-Decandiol hinzugefügt und 10 Stunden am Rückfluß erhitzt. Beim Erkalten kristallisierten 107,3 g Rohprodukt aus, welches aus Toluol umkristallisiert wurde. Das Kristallisat wurde zur Entfernung von 1,10-Decandiol mit heißem Methylenchlorid gewaschen. Nach dem Trocknen wurden 50,6 g (= 65,5% Ausbeute bezogen auf eingesetztes Carbamat) 1-(4-Hydroxyphenylcarbamoyloxy)-10-hydroxydecan mit einem Schmelzpunkt von 110°C erhalten. Beim Umkristallisieren aus Toluol verblieben 12 g eines Toluolunlöslichen Rückstands, welcher im wesentlichen (nach 1 H-NMR) aus 1,10-Bis-(4-hydroxyphenylcarbamoyloxy)-decan bestand.

In der gleichen Weise wurden weitere α-ω-Alkandiole zu den gewünschten Dihydroxymonourethanen umgesetzt, Ergebnisse siehe Tabelle 4.

TABELLE 4

Reaktionsprodukt:

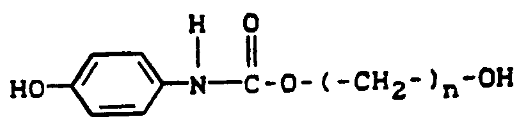

| Beispiel Nr. | n | Ausbeute (%) | Schmelzpunkt °C |
|---|---|---|---|
| 8.1*) | 6 | 81 | 126—30 |
| 8.2 | 12 | 69 | 155 |
| 8.3 | 16 | 74 | 151 |
| 8.4 | 19 | 72 | 148 |
| 8.5**) | 4 | 75 | 129—30 |

*) Das Reaktionsgemisch wurde zuerst in Methylenchlorid, dann in 4%iger Salzsäure aufgerührt, mit Wasser nachgewaschen und der erhaltene Feststoff getrocknet und aus n-Hexan umkristallisiert.

**) zum Vergleich

Beispiel 9

Nach der Arbeitsweise von Beispeil 8 wurden 45,3 g (0,250 Mol) N-(4-Hydroxyphenyl)-ethylcarbamat mit 35,8 g + 73,9 g (zusammen 0,383 Mol) 1,12-Octadecandiol umgesetzt und aufgearbeitet. Es wurden 74,8 g (= 71% Ausbeute bezogen auf eingesetztes Carbamat) des gewünschten Reaktionsprodukts 1-(4-Hydroxyphenylcarbamoyloxy)-12-hydroxyoctadecan mit einem Schmelzpunkt von 123—25°C erhalten.

Als in Toluol unlöslicher Rückstand wurden 13,5 g des Dihydroxybisurethans (siehe Beispiel 2.3) erhalten.

Beispiel 10

Nach der Arbeitsweise von Beispiel 8 wurden 45,3 g (0,250 Mol) N-(4-Hydroxyphenyl)-ethylcarbamat mit 18,8 g + 38,7 g (zusammen 0,383 Mol) Triethylenglykol umgesetzt. Aus dem erkalteten Reaktionsgemisch wurde ein zäh-viskoses Produkt abgetrennt und dieses mehrfach in 50°C warmen Wasser aufgerührt und das Wasser abgegossen. Der Rückstand wurde in 1 l heißem Ethanol aufgenommen. Beim Erkalten fiel ein öliges Produkt aus, welches abgetrennt und getrocknet wurde. Es erwies sich als das gewünschte 1-(4-Hydroxyphenylcarbamoyloxy)-8-hydroxy-3,6-dioxaoctan. Ausbeute: 57,7 g = 81%, bezogen auf eingesetzten Carbamat.

Beispiel 11

Dieses Beispiel beschriebt die Herstellung erfindungsgemäßer Urethane aus einem Polyurethan (polymeres Hydroxy-phenylisocyanat).

Stufe 1); Beispiel 11.1:

Herstellung von Poly-[-4-(carbamoyloxy)-benzol].

In einer Rührapparatur mit 20 cm Vigreux-Kolonne und Destillationsaufsatz wurden in 570 g ortho-Dichlorbenzol 81,45 g (0,45 Mol) N-(4-Hydroxyphenyl)-ethylcarbamat am Rückfluß erhitzt. Nach 5 Stunden wurde begonnen, Ethanol abzudestillieren. Als der Ethanolanfall nach 3 Stunden nachließ, wurden 30 g Chinolin hinzugefügt und es wurde erneut Ethanol abgenommen. Als nach insgesamt 20 Stunden Reaktionszeit die Reaktion beendet war, wurde abgekühlt, der ausgefallene Feststoff abgesaugt, gründlich mit Aceton gewaschen und getrocknet. Das Produkt war in Dimethylsulfoxid löslich. Die Charakterisierung durch die 1 H-NMR-Spektroskopie war in Übereinstimmung mit den Daten für Poly-[-4-(carbamoyloxy)-benzol] von EP 0 094 861, Beispiel 1. Ausbeute: 58 g = 95,4% der Theorie.

Stufe 2a); Beispiel 11.2:

Herstellung von 1,10-Bis-4-(hydroxyphenyl-carbamoyloxy)-decan.

In einer Rührapparatur wurden 15 g (0,11 Mol als Monomer gerechnet) des nach Stufe 1) erhaltenen Polymers in einer Lösung von 8,7 g (0,05 Mol) 1,10-Decandiol, 190 g otho-Dichlorbenzol und 10 g Chinolin suspendiert und 5 Stunden am Rückfluß erhitzt. Der angefallene Fesstoff wurde abgesaugt und mit Aceton gewaschen. Nach dem Trocknen wurden 22 g (99% Ausbeute) des gewünschten Bisurethans mit einem Schmelzpunkt von 194°C bis 198°C erhalten; die spektroskoposchen Daten stimmten mit denen des Produkts von Beispiel 1 überein.

Stufe 2b); Beispiel 11.3:

Herstellung von 1-(4-Hydroxyphenylcarbamoyloxy)-10-hydroxydecan.

In einer Rührapparatur wurden 13,5 g (0,1 Mol als Monomer gerechnet) des nach Stufe 1) erhaltenen Polymers in einer Lösung von 26,1 g (0,15 Mol) 1,10-Decandiol, 190 g ortho-Dichlorbenzol und 10 g Chinolin 5 Stunden am Rückfluß erhitzt. Der angefallene Feststoff wurde abgesaugt und in 1 l Aceton aufgenommen. Ein geringer, unlöslicher Anteil wurde abgetrennt und verworfen. Die Acetonphase wurde am Rotationsverdampfer zur Trockne eingeengt, der Rückstand mit Methylenchlorid gewaschen und aus Toluol umkristallisiert. Als Kristallisat wurden 17,75 g (57% Ausbeute) des gewünschten Dihydroxymonourethans erhalten. Es stimmte im Schmelzpunkt und den spektroskopischen Daten mit dem Produkt von Beispiel 8 überein. Ferner wurden 4,2 g eines in Toluol unlöslichen Rückstandes erhalten, welcher sich als das Dihydroxybisurethan erwies.

Herstellung von 1-(4-Hydroxyphenylcarbamoyloxy)-10-hydroxydecan als Eintopfreaktion; Beispiel 11.4:

In einer Rührapparatur mit 20 cm Vigreux-Kolonne und Destillationsaufsatz wurden 18,1 g (0,1 Mol) N-(4-Hydroxyphenyl)-ethylcarbamat, 190 g ortho-Dichlorbenzol und 10 g Chinolin zunächst 5 Stunden lang am Rückfluß erhitzt. Dann wurde erschöpfend Ethanol abdestilliert. Es wurden 26,1 g (0,15 Mol) 1,10-Decandiol hinzugefügt und nochmals 5 Stunden lang am Rückfluß erhitzt. Nach Aufarbeitung wie bei Beispiel 11.3 wurden 22 g (70% Ausbeute) des gewünschten Dihydroxymono-urethans erhalten.

Beispiel 12

In einer Rührapparatur mit 20 cm Vigreux-Kolonne und Destillationsaufsatz wurden 10,1 g (0,05 Mol) 1,12-Dodecandiol in Gegenwart von 10 g Chinolin mit 29,3 g (0,1 Mol) N-(3,5-di-tert.-butyl-4-hydroxyphenyl)-1-propylcarbamat in 190 g ortho-Dichlorbenzol unter erschöpfendem Abdestillieren von 1-Propanol umgesetzt. Dann wurde nochmals die gleiche Menge 1,12-Dodecandiol zugesetzt und 5 Stunden am Rückfluß erhitzt.

Die erkaltete Reaktionslösung wurde mit insgesamt 1 l 4 %iger Salzsäure gewaschen und die organische Phase durch Stehen über $Na_2CO_3$ getrocknet und entsäuert. Nach Entfernen des Lösungsmittels im Vakuum wurden 29,3 g (65% Ausbeute) 1-(3,5-di-tert.-butyl-4-hydroxyphenylcarbamoyloxy)-12-hdyroxydodecan als zähes Öl erhalten. Nach Umkristallisieren aus n-hexan lag ein Feststoff mit einem Schmelzpunkt von 74—75°C vor.

Beispiel 13,1

Herstellung von Tris-(4-hydroxyphenylurethanen) aus Trihydroxyverbindungen:

In einer Rührapparatur mit 20 cm Vigreux-Kolonne und Destillationsaufsatz wurden 260 g ortho-Dichlorbenzol, 10 g Chinolin, 27,15 g (0,15 Mol) N-(4-hydroxyphenyl)-ethylcarbamat und 15,3 g (0,05 Mol) eines Triols mit einer OH-Zahl von 550, einem Molekulargewicht von 306 und einem Mol-Verhältnis von Ethylenoxid zu Propylenoxid von 8:1 (statistische Verteilung), das durch Umsetzung von Ethylenoxid und Propylenoxid mit 2-Ethyl-2-hydroxymethyl-1,3-propandiol in bekannter Weise hergestellt wurde und bei Raumtemperatur flüssig war, unter erschöpfendem Abdestillieren von Ethanol zum Sieden erhitzt (ca. 5 Stunden). Das zum Teil zähflüssige Reaktionsgemisch wurde bei 120°C/20 mbar am Rotationsverdampfer von Lösungsmittel befreit. Der Rückstand wurde dreimal mit heißem Toluol (insgesamt 1 l) aufgekocht und dieses abgegossen.

Der Rückstand wurde am Rotationsverdampfer bei 120°C/5 mbar von Toluolresten befreit. Nach dem Abkühlen wurden 27,4 g vom gwünschten Tris-(4-hdyroxyphenyl-urethan) erhalten. Weitere Details siehe Tabelle 5.

Beispiele 13,2 bis 13,4

In der gleichen Weise wurden weitere Triole zu den entsprechenden Tris-4-hydroxyphenyl-urethanen umgesetzt. Die Ergebnisse sind aus Tabelle 5 ersichtlich.

Beispiel 13.2:

Das eingesetzte Triol war hergestellt worden wie in Beispiel 13.1 beschrieben, es wies jedoch eine OH-Zahl von 250, ein Molekulargewicht von 673 und ein Mol-Verhältnis von Ethylenoxid zu Propylenoxid von 18,5:1 (statistischer Verteilung) auf.

Beispiel 13.3:

Das eingesetzte Triol war hergestellt worden wie in Beispiel 13.1 beschrieben, jedoch nur durch Ethoxylierung, und wies eine OH-Zahl von 578,5 und ein Molekulargewicht von 291 auf.

Beispiel 13,4:

Das eingesetzte Triol war hergestellt worden wie in Beispiel 13,3 beschrieben. Es wies eine OH-Zahl von 282 und ein Molekulargewicht von 597 auf.

TABELLE 5

Reaktionsprodukt:

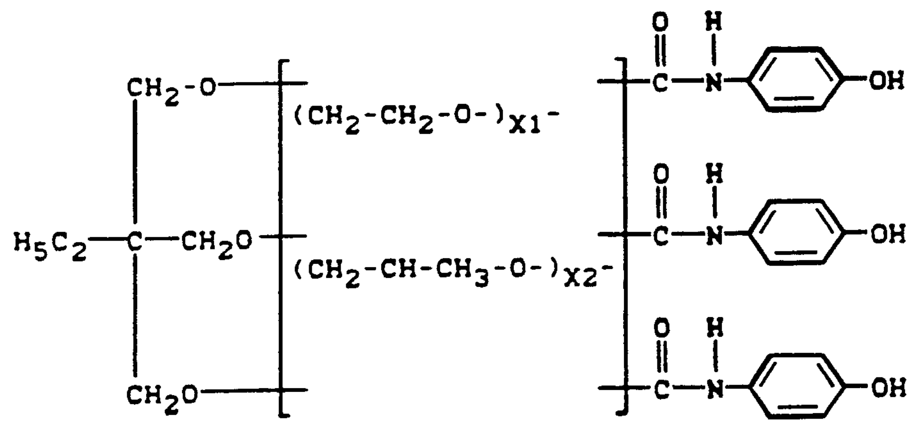

| Beispeil Nr. | $X_1$ | $X_2$ | Ausbeute % | Schmelzpunkt °C oder Konsistenz |
|---|---|---|---|---|
| 13.1 | 3,38 | 0,42 | 77 | 49—55 |
| 13.2 | 11,43 | 0,62 | 82 | zäh-viskos |
| 13.3 | 3,57 | 0 | 82 | zäh-viskos |
| 13.4 | 10,52 | 0 | 80 | zäh-viskos |

Beispiel 14,1:

Herstellung von 1,10-bis-(chlorcarbonyloxydecan).

In einer Rührapparatur (Rückflußkühler: −20°C) wurden 27,9 g (0,16 Mol) 1,10-Decandiol in 100 ml wasserfreiem 1,4-Dioxan suspendiert. Im Verlauf von 25 Min. wurden 41 g (0,45 Mol) Phosgen eingeleitet; durch Kühlen mit einem Eisbad wurde die Temperatur bei +10 bis +15°C gehalten.

Während des Phosgeneinleitens entstand eine klare Lösung. Es wurde noch 2 Stunden bei Raumtemperatur nachgerührt, dann wurde mittels trockenem Stickstoff überschüssiges Phosgen ausgeblasen.

Beispiel 14,2:

(Herstellung von 1,10-Bis-(4-hydroxyphenylcarbamoyloxy)-decan

Die gemäß Beispiel 14,1 erhaltene Dioxan-Lösung mit 47,1 g (0,16 Mol) 1.10-Bis-(chlorcarbonyloxy)-decan wurde in einer Rührapparatur zu einer Suspension aus 26,5 g fein zerriebenem Natriumcarbonat, 32,7 g (0,3 Mol) 4-Aminophenol, 150 g Benzol und 150 g Essigsäureethylester so zugetropft, daß die Innentemperatur 30 bis 35°C betrug. Es wurde noch 2 Stunden bei Raumtemperatur nachgerührt, dann wurde der angefallene Feststoff abgesaugt, in 1 l Wasser aufgerührt, wieder abgesaugt und aufeinanderfolgend mit Wasser und Methanol nachgewaschen.

Zur Entfernung von Decandiol wurde der weiße pulverförmige Feststoff in 300 ml Aceton aufgerührt, abgesaugt und getrocknet.

Es wurden so 55 g (41% Ausbeute bezogen auf 4-Amino-phenol) des gewünschten Bisurethans erhalten. Es stimmte in seinen spektroskopischen Eigenschaften mit dem Produkt aus Beispiel 1 überein.

Beispiel 15

(Herstellung von 1-(4-Hydroxyphenylcarbamoyloxy)-10-hydroxydecan durch Hydrolyse des Chlorkohlensäureester-Zwischenprodukts).

Zunächst wurde, wie in Beispiel 14,1 beschrieben, eine Lösung von 75 g (0,255 Mol) 1,10-Bis-(chlorcarbonyloxy)-decan in 155 ml 1,4-Dioxan hergestellt. Diese Lösung wurde unter Rühren bei 10°C Innentemperatur zu einer Suspension von 21,8 g (0,2 Mol) 4-Aminophenol und 17,7 g Natriumcarbonat in 150 g Benzol und 150 g Essigsäureethylester innerhalb von 10 Min, zugetropft und 2 Stunden bei Raumtemperatur nachgerührt.

Dann wurde das Reaktionsgemisch auf 300 ml zerstoßenes Eis gegossen und die Wasserphase durch Zugabe von Natriumhydrogencarbonat auf einen pH-Werydrogencarbonat auf einen pH-Wert von 8 eingestellt. Nach mehrmaligem Umrühren und Stehen über Nacht wurde der verbliebene Feststoff abgesaugt, nacheinander mit je 300 ml n-Hexan und einem Gemisch aus gleichen Teilen Methanol und Wasser aufgerührt, abgesaugt und mit Methanol nachgewaschen. Der weiße Feststoff wurde aus Toluolumkristallisiert. Es wurden so 35 g (56,5% Ausbeute bezogen auf 4-Aminophenol) des gewünschten Monourethans erhalten, welches im Schmelzpunkt und dem spektroskopischen Charakteristiken mit dem Produkt von Beispiel 8 übereinstimmte.

Beispiel 16

(Bestimmung des thermischen Zersetzungsverhaltens erfindungsgemäßer Urethane und einiger Vergleichsverbindungen).

Das Zersetzungsverhalten wurde durch eine quantitative Differentialthermoanalyse (DTA) untersucht. Die Messungen wurden mit einem Gerät der Firma Mettler, Typ TA 2000 in geschlossenen Proben-Meßzellen aus Hastelloy® C 4 mit Glaseinsatz durchgeführt. Zunächst wurde zur Übersicht mit einer Aufheizrate von 5 K/Min. der Bereich von 100 bis 400°C vermessen. Dann wurde ab 150°C in Stufen von 5 K bei jeweils 25 Min. Isothermzeit das Zesetzungsverhalten, erkenntlich en Enthalpieeffekten außerhalb des Schmelzvorgangs, festgestellt.

Der nach dieser Isotherm-Stufen-Analyse festgestellte Zersetzungsbeginn ist aus Tabelle 6 ersichtlich. Der zugehörige Enthalpieeffekt ist ebenfalls vermerkt (endo für endotherm, exo für exotherm).

Die Vergleichsbeispiele 16.1, 16,11 und 16.21 zeigen den Zersetzungsbeginn bei deutlich niedrigeren Temperaturen als die erfindungsgemäßen Urethane.

TABELLE 6

Thermisches Zersetzungsverhalten von Bisurethanen

| Beispiel Nr. | Substanz aus Beispiel Nr. | Zersetzungsbeginn °C | Enthalpieeffekt |
|---|---|---|---|
| 16.1 | 1.1 | 205 | endo |
| 16.2 | 2.1 | 260 | endo |
| 16.3 | 1 | 280 | exo |
| 16.4 | 1.3 | 275 | exo |
| 16.5 | 1.4 | 310 | endo |
| 16.6 | 2.3 | 280 | endo |
| 16.7 | 1.5 | 295 | endo |
| 16.8 | 3,Produkt A | 295 | exo |
| 16.9 | 3,Produkt B | 250 | endo |
| 16.11 | 4.1 | 195 | exo |
| 16.12 | 4 | 250 | exo |
| 16.13 | 4.2 | 280 | exo |
| 16.14 | 4.3 | 340 | exo |
| 16.15 | 4.4 | 270 | exo |
| 16.16 | 2.4 | 270 | exo |
| 16.17 | 2.5 | 260 | exo |
| 16.18 | 2.6 | 260 | exo |
| 16.19 | 2.7 | 280 | exo |
| 16.20 | 5 | 285 | endo |
| 16.21 | 8.5 | 220 | endo |
| 16.22 | 8.1 | 250 | exo |
| 16.23 | 8.2 | 250 | exo |

Beispiel 17

(Herstellung von 1-(Chlorcarbonyloxy)-10-(4-hydroxyphenylcarbamoyloxy)-decan):

Es wurde wie in Beispiel 15 verfahren, jedoch wurde das Reaktionsgemisch nicht auf Eis gegossen, sondern direkt abgesaugt. Der erhaltene Feststoff wurde mit insgesamt 500 ml 80°C warmem Toluol ausgewaschen. Aus dem Toluol kristallisierten beim Erkalten 3,7 g eines weißen Feststoffes aus, welcher sich als gleiches Bisurethan erwies wie gemäß Beispiel 1 erhalten. Der in Toluol unlösliche Feststoff wurde in 300 ml heißem Methylenchlorid aufgeschlämmt. Die Suspension wurde zur Abtrennung der anorganischen Salze abfiltriert. Das Filtrat wurde im Vakuum von Lösungsmittel befreit, und der verbliebene Rückstand wurde mit 300 ml 40°C warmem n-Hexan ausgewaschen und im Vakuum getrocknet. Es wurden so 43,5 g (59% Ausbeute, bezogen auf 4-Aminophenol) des gewünschten Reaktionsprodukts erhalten.

Charakterische Daten:

Schmelzpunkt: schmelzen unter starker Zersetzung ab 73°C

Massenspektrometrie (m/e):

371 $[M]^+$, sehr schwach; 327 $[M—CO_2]^+$; 291 $[M—CO_2—HCl]^+$; 153 $[HO—C_6H_4—NHCO_2H]^+$ stark; 135 $[HO—C_6H_4—NCO]^+$; 109 $[HO—C_6H_4NH_2]^+$ stark.

IR-Spektroskopie (KBr-Preßling; $cm^{-1}$):

3340, 2925, 2855, 1780, 1700, 1610, 1540, 1520.

**Patentansprüche**

1. Naue Hydroxyphenylurethane der Formel (3)

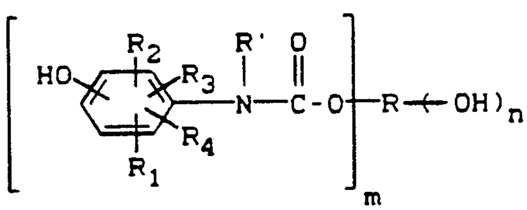

(3),

in der

m für eine ganze Zahl von 1 bis 4 und

n für Null oder eine ganze Zahl von 1 bis 3 steht und die Summe von m + n mindestens 2 und höchstens 4 beträgt,

$R_1$ bis $R_4$ unabhängig voneinander Wasserstoff, Halogen, Cyano, Alkyl, Cycloalkyl, Aryl, Aralkyl, Oxyalkyl, Oxyphenyl oder Oxybenzyl,

R' Wasserstoff, Alkyl, Acyl oder Phenyl und

R im Falle von m + n von 2 bis 4

a) einem m + n-bindigen, geradkettigen, verzweigten oder cyclischen, gesättigten oder ungesättigten, gegebenenfalls substituierten Kohlenwasserstoffrest mit insgesamt 6 bis 30 C-Atomen oder

b) einen Rest der Formel (4)

$$Z\{(OC_2H_3Y)_r\}_{m+n} \qquad (4)$$

mit Z = einem geradkettigen, verzweigten oder cyclischen, gesättigten oder ungesättigten, gegebenenfalls substituierten Rest mit insgesamt 3 bis 20 C-Atomen,

Y = H und/oder$CH_3$ (unabhängig von benachbarten Kettengliedern) und

r = einer ganzen Zahl von 1 bis 1000 oder einem gegebenenfalls nicht ganzzahligen Mittelwert von 1 bis 1000 und im Falle von m + n = 2 auch

c) einem Rest der Formel (5)

$$-[(CH_2)_s-O]_t(CH_2)_s- \qquad (5)$$

mit s = einer ganzen Zahl von 3 bis 6 und dem Produkt s·t = einer ganzen Zahl von 6 bis 30 oder einem gegebenenfalls nicht ganzzahligen Mittelwert von 6 bis 30 oder

d) einen Rest der Formel (6)

$$-(C_2H_3Y—O)_u-(C_2H_3Y)- \qquad (6)$$

mit u = einer ganzen Zahl von 2 bis 200 000 oder einem gegebenenfalls nicht ganzzahligen Mittelwert von 2 bis 200 000 und worin

Y die gleiche Bedeutung hat wie bei Formel (4), bedeuten, mit Ausnahme von Verbindungen der Formel

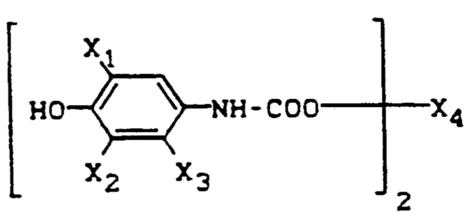

in der

$X_1$ $C_3$- oder $C_4$-Alkyl

$X_2$ $C_1$- bis $C_4$-Alkyl,

$X_3$ Wasserstoff oder Methyl und
$X_4$ $C_2$- bis $C_8$-Alkylen, Phenylen oder einen Rest der Formel

$$-(CH_2)_p-X-(CH_2)_q-$$

mit X = Sauerstoff oder Schwefel und p und q unabhängig voneinander gleich 2 oder 3 bedeuten.

2. Neue Hydroxyphenylurethane nach Anspruch 1, dadurch gekennzeichnet, daß sich die OH-Gruppe am aromatischen Kern in meta- oder para-Stellung zur —NR'CO . . .-Gruppierung befindet.

3. Neue Hydroxyphenylurethane nach Ansprüchen 1 und 2, dadurch gekennzeichnet, daß bei den Resten $R_1$ bis $R_4$ Halogen für Fluor, Chlor, Brom oder Jod, Alkyl für $C_1$- bis $C_{20}$-Alkyl, Cycloalkyl für $C_3$- bis $C_{20}$-Cycloalkyl, Aryl für $C_6$- bis $C_{20}$-Aryl, Aralkyl für $C_7$- bis $C_{10}$-Aralkyl und Oxyalkyl für Oxy-$C_1$- bis Oxy-$C_{20}$-Alkyl steht.

4. Neue Hydroxyphenylurethane nach Ansprüchen 1 bis 3, dadurch gekennzeichnet, daß $R_1$ bis $R_4$ unabhängig voneinander für Wasserstoff, Chlor, Methyl oder tert.- Butyl stehen.

5. Neue Hydroxyphenylurethane nach Ansprüchen 1 bis 4, dadurch gekennzeichnet, daß R' für Wasserstoff, $C_1$- bis $C_6$-Alkyl, $C_1$- bis $C_6$-Acyl oder Phenyl steht.

6. Neue Hydroxyphenylurethane nach Ansprüchen 1 bis 5, dadurch gekennzeichnet, daß R in der Bedeutung von a) für eine gesättigte Kohlenwasserstoffkette mit insgesamt 6 bis 20 C-Atomen, die gegebenenfalls 1 bis 3 gesättigte Kohlenwasserstoffseitenketten mit je 1 bis 3 C-Atomen, gegebenenfalls 1 bis 8 Fluor- und/oder Chloratomen, gegebenenfalls 1 bis 3 Alkoxygruppen mit je 2 bis 4 C-Atomen, gegebenenfalls 1 bis 2 Estergruppen mit je 2 bis 4 C-Atomen, gegebenenfalls 1 bis 3 Cycloalkylreste und/oder gegebenenfalls 1 bis 3 Phenylreste als Substituenten enthalt, sowie für Kohlenwasserstoffreste der gleichen Art, bei denen das Kohlenwasserstoffgerüst 1 bis 2 ethylenische Doppelbindungen enthält, steht.

7. Verfahren zur Herstellung von Hydroxyphenylurethanen der in Anspruch 1 angegebenen Formel, dadurch gekennzeichnet, daß man Poly-Chlorkohlensäureester der Formel (48)

$$R\text{—}(\text{—}O\text{—}\overset{\overset{\displaystyle O}{\|}}{C}\text{—}Cl)_{m+n} \qquad (48)$$

in der
R, m und n die in Anspruch 1 angegebene Bedeutung haben, mit Aminophenolen der Formel (49)

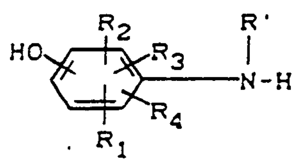
(49),

in der
$R_1$, $R_2$, $R_3$, $R_4$ und R' die in Anspruch 1 angegebene Bedeutung haben, gegebenenfalls in Gegenwart von säurebindenden Mitteln, zu einer Verbindung der Formel (50) umsetzt

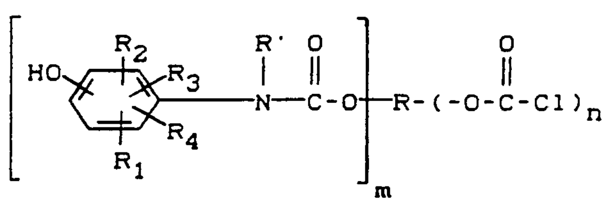
(50)

in der
$R_1$, $R_2$, $R_3$, $R_4$, R', R, m und n die in Anspruch 1 angegebene Bedeutung haben und die Verbindung der Formel (50), falls dort n von Null verschieden ist, hydrolysiert.

8. Verfahren nach Anspruch 7, dadurch gekennzeichnet, daß man die Umsetzung bei Temperaturen im Bereich −10 bis +80°C durchführt.

9. Verwendung von Hydroxylphenylurethanen der in Anspruch 1 angegebenen Formel zur Herstellung von hochschmelzenden Polykondensaten, Polyestern, Polycarbonaten und/oder Polyaddukten und als Alterungsschutzmittel und Oxidationsinhibitoren.

10. Hydroxyphenylurethangruppen enthaltende Chlorkohlensäureester der Formel (50)

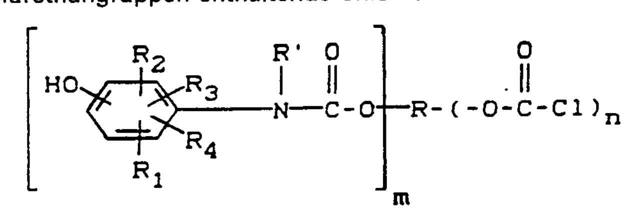
(50)

in der

$R_1$, $R_2$, $R_3$, $R_4$, R', R, m und n die in Anspruche 1 angegebene Bedeutung haben und n für eine ganze Zahl von 1 bis 3 steht.

## Revendications

1. Nouveaux hydroxyphényluréthannes de formule (3)

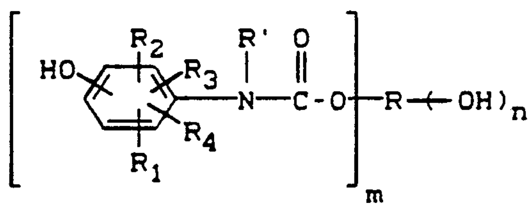 (3),

dans laquelle

m est un nombre entier valant 1 à 4, et

n est nul ou est un nombre entier valant 1 à 3, et la somme (m+n) vaut au minimum 2 et au maximum 4, les symboles $R_1$ à $R_4$ représentent chacun, indépendamment l'un de l'autre, un atome d'hydrogène, un atome d'halogène, un groupe cyano, alkyle, cycloalkyle, aryle, aralkyle, oxyalkyle, oxyphényle ou oxybenzyle,

R' représente un atome d'hydrogène, un groupe alkyle, acyle ou phényle, et le symbole R représente, si (m+n) vaut 2 à 4,

a) un reste d'hydrocarbure à (m+n) liaisons, linéaire, ramifiée ou cyclique, saturée ou insaturée, éventuellement substituée, ce reste comportant au total 6 à 30 atomes de carbone, ou

b) un reste de formule (4)

$$Z[(OC_2H_3Y)_r]_{m+n} \qquad (4)$$

dans laquelle

Z représente un reste linéaire, ramifié ou cyclique, saturé ou insaturé, éventuellement substitué, comportant au total 3 à 20 atomes de carbone,

Y représente H et/ou $CH_3$ (indépendamment des chaînons voisins) et

r est un nombre entier valant 1 à 1 000 ou un nombre éventuellement non entier dont la valeur moyenne va de 1 à 1 000 et si (m+n) vaut 2, le symbole R peut représenter aussi

c) un reste de formule (5)

$$[(CH_2)_s-O]_t(CH_2)_s \qquad (5)$$

dans laquelle

s est un nombre entier valant 3 à 6 et le produit s.t est un nombre entier valant 6 à 30 ou un nombre éventuellement non entier dont la valeur moyenne va de 6 à 30, ou bien

d) un reste de formule (6)

$$(C_2H_3Y-O)_u(C_2H_3Y) \qquad (6)$$

dans laquelle

u est un nombre entier valant 2 à 200 000 ou un nombre éventuellement non entier dont la valeur moyenne va de 2 à 200 000, et

Y a le même sens que pour la formule (4), à l'exclusion des composés de formule

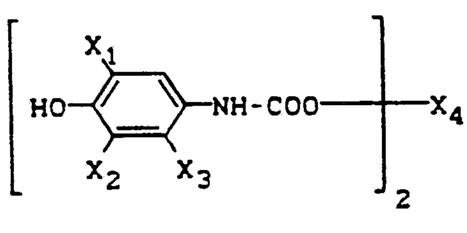

dans laquelle

$X_1$ représente un groupe alkyle en $C_3$ ou $C_4$,

$X_2$ représente un groupe alkyle en $C_1$ à $C_4$,

$X_3$ représente un atome d'hydrogène ou un groupe méthyle, et
$X_4$ représente un groupe alkylène en $C_2$ à $C_8$, phénylène ou un reste de formule

$$-(CH_2)_p-X-(CH_2)_q-$$

dans laquelle X représente un atome d'oxygène ou de soufre et p et q valent, indépendament l'un de l'autre, 2 ou 3.

2. Nouveaux hydroxyphénypluréthannes selon la revendication 1, caractérisés en ce que le groupe OH se trouve sur le noyau aromatique en position méta ou para par rapport au groupe —NR'CO . . .—.

3. Nouveaux hydroxyphényluréthannes selon les revendications 1 et 2, caractérisés en ce que, dans la définition des restes $R_1$ à $R_4$, un halogène représente un atome de fluor, de chlore, de brome ou d'iode, un groupe alkyle représente un groupe alkyle en $C_1$ à $C_{20}$, un groupe cycloalkyle représente un groupe cycloalkyle en $C_3$ à $C_{20}$, un groupe aryle représente un groupe aryle en $C_6$ à $C_{20}$, un groupe, aralkyle représente un groupe aralkyle en $C_7$ à $C_{10}$ et un groupe oxyalkyle représente un groupe oxyalkyle en $C_1$ à $C_{20}$.

4. Nouveaux hydroxyphényluréthannes selon les revendications 1 à 3, caractérisés en ce que, indépendamment l'un de l'autre, les symboles $R_1$ à $R_4$ représentent chacun un atome d'hydrogène ou de chlore, ou un groupe méthyle ou tert-butyl.

5. Nouveaux hydroxyphényluréthannes selon les revendications 1 à 4, caractérisés en ce que le symbole R' représente un atome d'hydrogène, un groupe alkyle en $C_1$ à $C_6$, un groupe acyle en $C_1$ à $C_6$ ou un groupe phényle.

6. Nouveaux hydroxyphényluréthannes selon les revendications 1 à 5, caractérisés en ce que, lorsque R a un sens a), il représente une chaîne d'hydrocarbure saturé comportant au total 6 à 20 atomes de carbone, contenant éventuellement 1 à 3 chaînes latérales hydrocarbonées saturées comportant chacune 1 à 3 atomes de carbone, éventuellement 1 à 8 atomes de fluor et/ou de chlore, éventuellement 1 à 3 groupes alcoxy ayant chacun 2 à 4 atomes de carbone, eventuellement 1 à 2 groupes esters ayant chacun 2 à 4 atomes de carbone, éventuellement 1 à 3 restes cycloalkyles et/ou éventuellement 1 à 3 restes phényles comme substituants, ainsi que des restes d'hydrocarbures de nature analogue, dans lesquels le squelette hydrocarboné contient 1 à 2 doubles liaison éthyléniques.

7. Procédé pour préparer des hydroxyphényluréthannes répondant à la formule indiquée à la revendication 1, procédé caractérisé en ce que l'on fait réagir des poly(esters) d'acides chlorocarboniques de formule (48)

$$R-(-O-\overset{\overset{\displaystyle O}{\|}}{C}-Cl)_{m+n} \qquad (48)$$

dans laquelle
R, m et n ont le sens indiqué à la revendication 1, avec des aminophénols de formule (49)

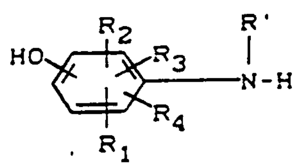

(49),

dans laquelle
$R_1$, $R_2$, $R_3$, $R_4$ et R' ont le sens indiqué à la revendication 1 éventuellement en présence d'agents de fixation des acides, pour obtenir un composé de formule (50)

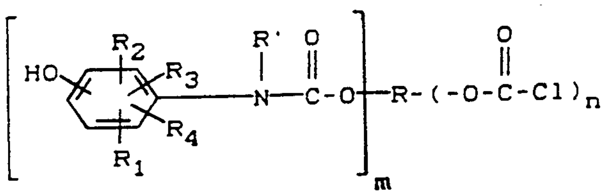

(50)

dans laquelle
$R_1$, $R_2$, $R_3$, $R_4$, R', R, m et n ont le sens indiqué à l revendication 1, et l'on hydrolyse le composé de formule (50) si, dans cette formule, n a une valeur différente de 0.

8. Procédé selon la revendication 7, caractérisé en ce qu'on conduit la réaction à des températures comprises entre −10 et +80°C.

9. Utilisation d'hydroxyphényluréthannes répondant à la formule indiquée à la revendication 1, pour préparer des polycondensats, des polyesters, des polycarbonates et/ou des produits de polyaddition, à

point élevé de fusion, et comme agents de protection contre le vieillissement et comme inhibiteurs d'une oxydation.

10. Esters d'acides chlorocarboniques, contenant des groupes hydroxyphényluréthannes, de formule (50)

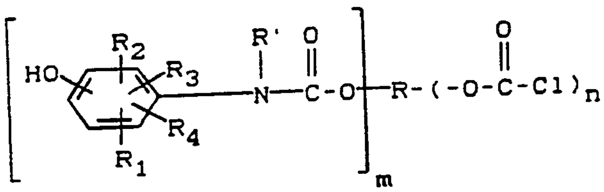

(50)

dans laquelle les symboles $R_1$, $R_2$, $R_3$, $R_4$, R', R, m et n ont le sens indiqué à la revendication 1, et n est un nombre entier valant 1 à 3.

**Claims**

1. New hydroxyphenylurethanes of the formula (3)

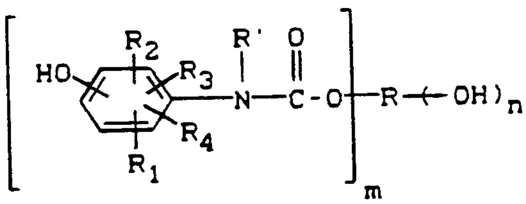

(3),

in which

m represents an integer from 1 to 4, and

n represents zero or an integer from 1 to 3, and the sum of m + n is at least 2 and a maximum of 4,

$R_1$ to $R_4$, independently of one another, denote hydrogen, halogen, cyano, alkyl, cycloalkyl, aryl, aralkyl, oxyalkyl, oxyphenyl or oxybenzyl,

R' denotes hydrogen, alkyl, acyl or phenyl, and

R, in the case where m + n is 2 to 4, denotes

a) an m + n-valent, straight-chain, branched or cyclic, saturated or unsaturated, optionally substituted hydrocarbon radical having a total of 6 to 30 C atoms, or

b) a radical of the formula (4)

$$Z[(-OC_2H_3Y)_r]_{m+n} \qquad (4)$$

where Z = a straight-chain, branched or cyclic, saturated or unsaturated, optionally substituted radical having a total of 3 to 20 C atoms,

Y = H and/or $CH_3$ (independently of the neighbouring chain members), and

r = an integer from 1 to 1000 or an optionally non-integral average value from 1 to 1000, and in the case where m + n = 2, alternatively denotes

c) a radical of the formula (5)

$$-[(CH_2)_s-O]_t-(CH_2)_s- \qquad (5)$$

where s = an integer from 3 to 6 and the product s·t = an integer from 6 to 30 or an optionally non-integral average value from 6 to 30, or

d) a radical of the formula (6)

$$-(C_2H_3Y-O)_u-(C_2H_3Y)- \qquad (6)$$

where u = an integer from 2 to 200,000 or an optionally non-integral average value from 2 to 200,000, and Y has the same meaning as in the case of formula (4), with the exception of compounds of the formula

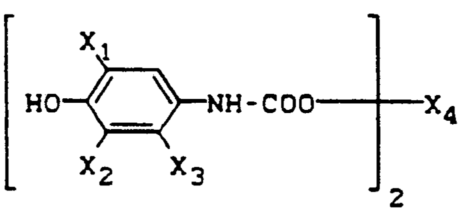

in which

$X_1$ denotes $C_3$- or $C_4$-alkyl,

$X_2$ denotes $C_1$- to $C_4$-alkyl,

$X_3$ denotes hydrogen or methyl and

$X_4$ denotes $C_2$- to $C_8$-alkylene, phenylene or a radical of the formula

$$-(CH_2)_p-X-(CH_2)_q-$$

where X = oxygen or sulphur and p and q, independently of one another, equal 2 or 3.

2. New hydroxyphenylurethanes according to Claim 1, characterized in that the OH group on the aromatic nucleus is on the meta or para position to the —NR'CO . . . grouping.

3. New hydroxyphenylurethanes according to Claims 1 and 2, characterized in that, in the radicals $R_1$ to $R_4$, halogen represents fluorine, chlorine, bromine or iodine, alkyl represents $C_1$- to $C_{20}$-alkyl, cycloalkyl represents $C_3$- to $C_{20}$-cycloalkyl, aryl represents $C_6$- to $C_{20}$-aryl, aralkyl represents $C_7$- to $C_{10}$-aralkyl and oxyalkyl represents oxy-$C_1$- to oxy-$C_{20}$-alkyl.

4. New hydroxyphenylurethanes according to Claims 1 to 3, characterized in that $R_1$ to $R_4$, independently of one another, represent hydrogen, chlorine, methyl or tert.-butyl.

5. New hydroxyphenylurethanes according to Claims 1 to 4, characterized in that R' represents hydrogen, $C_1$- to $C_6$-alkyl, $C_1$- to $C_6$-acyl or phenyl.

6. New hydroxyphenylurethanes according to Claims 1 to 5, characterized in that R, in the meaning of a), represents a saturated hydrocarbon chain, having a total of 6 to 20 C atoms, which contains, as substituents, 1 to 3 saturated hydrocarbon side chains each having 1 to 3 C atoms, 1 to 8 fluorine and/or chlorine atoms, 1 to 3 alkoxy groups each having 2 to 4 C atoms, 1 to 2 ester groups each having 2 to 4 C atoms, 1 to 3 cycloalkyl radicals and/or 1 to 3 phenyl radicals, in each case optionally, and represents hydrocarbon radicals of the same type in which the hydrocarbon structure contains 1 to 2 ethylenic double bonds.

7. Process for the preparation of hydroxyphenylurethanes of the formula mentioned in Claim 1, characterized in that poly-chlorocarbonates of the formula (48)

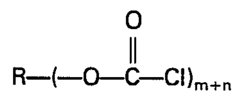

(48)

in which

R, m and n have the meaning mentioned in Claim 1, are reacted with aminophenols of the formula (49)

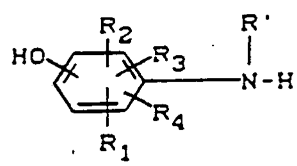

(49),

in which

$R_1$, $R_2$, $R_3$, $R_4$ and R' have the meaning mentioned in Claim 1, if appropriate in the presence of acid-binding agents, to form a compound of the formula (50)

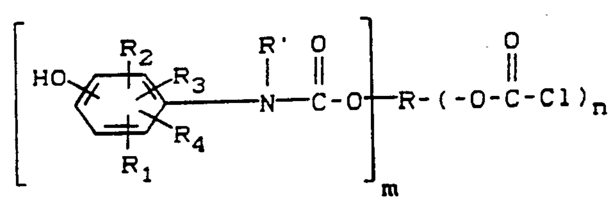

(50)

in which

$R_1$, $R_2$, $R_3$, $R_4$, R', R, m and n have the meaning mentioned in Claim 1, and the compound of the formula (50), if n there is not zero, is hydrolyzed.

8. Process according to Claim 7, characterized in that the reaction is carried out at temperatures in the range −10 to +80°C.

9. Use of hydroxylphenylurethanes of the formula mentioned in Claim 1, for the preparation of high-

melting polycondensates, polyesters, polycarbonates and/or polyadducts, and as anti-ageing agents and oxidation inhibitors.

10. Hydroxyphenylurethane group-containing chlorocarbonates of the formula (50)

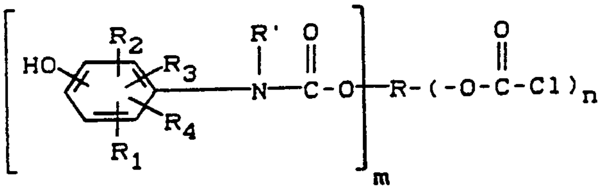

(50)

in which

$R_1$, $R_2$, $R_3$, $R_4$, R′, R, m and n have the meaning mentioned in Claim 1 and n represents an integer from 1 to 3.